# EUROPEAN PATENT SPECIFICATION

(11) **EP 4 394 544 B1**
(45) Date of publication and mention of the grant of the patent: **28.10.2026**
(21) Application number: 22878738.8
(22) Date of filing: 06.09.2022
(51) Int. Cl.: G06F 1/16, G09F 9/30, C09J 9/00, H04M 1/02

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 06.10.2021 KR 20210132538
(43) Date of publication of application: 03.07.2024
(73) Proprietor: Samsung Electronics Co., Ltd., Suwon-si, Gyeonggi-do 16677 (KR)
(72) Inventor: LEE, Jookwan, Suwon-si, Gyeonggi-do 16677 (KR); KIM, Yangwook, Suwon-si, Gyeonggi-do 16677 (KR); JI, Youngmin, Suwon-si, Gyeonggi-do 16677 (KR); KANG, Jooyoung, Suwon-si, Gyeonggi-do 16677 (KR); KWAK, Myunghoon, Suwon-si, Gyeonggi-do 16677 (KR); KWON, Yongjin, Suwon-si, Gyeonggi-do 16677 (KR); CHO, Joongyeon, Suwon-si, Gyeonggi-do 16677 (KR); PARK, Jihea, Suwon-si, Gyeonggi-do 16677 (KR)
(74) Representative: Gulde & Partner
(86) International application number: PCT/KR2022/013344
(87) International publication number: WO 2023/058917

(56) References cited:
- EP-A1- 4 047 913
- WO-A1-2021/075610
- JP-A- 2013 150 289
- KR-A- 20090 096 416
- KR-A- 20130 022 630
- KR-A- 20190 141 518
- KR-B1- 100 724 849
- US-B2- 10 817 022
- US-B2- 9 230 468

## Description

### [Technical Field]

Various embodiments of the disclosure relate to an electronic device including a flexible display.

### [Background Art]

Due to the advancement of information and communication technology and semiconductor technology, various functions are being integrated into a single portable electronic device. For example, electronic devices may implement not only communication functions, but also entertainment functions such as games, multimedia functions such as music/video playback, communication and security functions for mobile banking, and functions for schedule management and an electronic wallet. These electronic devices are being miniaturized to be conveniently carried by users.

As mobile communication services expand into the multimedia service area, the size of the display of electronic devices needs to be increased to allow users to fully utilize multimedia services as well as voice calls and short messages. However, the size of the display of an electronic device is in a trade-off relationship with the miniaturization of the electronic device.

Conventional electronic devices including a flexible display, a sensor module and a dot code pattern are disclosed in WO 2021/075610 A1 and EP 4 047 913 A1.

### [Detailed Description of the Invention]

### [Technical Solution]

The invention is defined by the appended set of claims. The description that follows is subjected to this limitation. Any disclosure lying outside the scope of said claims is only intended for illustrative as well as comparative purposes.

According to the invention, an electronic device includes a housing including a first housing and a second housing configured to accommodate at least a part of the first housing and guide a sliding movement of the first housing, a flexible display, a part of which is connected to the second housing, and which is configured to be unfolded and folded based on the sliding movement of the first housing, a sensor module disposed in the first housing, a multi-bar structure received in a guide rail of first housing and configured to support at least a portion of the flexible display, dot code patterns disposed on bars of the multi-bar structure and configured to slide with respect to the sensor module, the dot code patterns comprising a dot area with a plurality of dots, wherein the sensor module is adapted to detect the plurality of dots and arranged to face the dot code patterns, and a processor configured to recognize the plurality of dots located in the dot area and to determine the slide distance of the first housing with respect to the second housing by using the sensor module.

### [Brief Description of Drawings]

FIG. 1 is a block diagram of an electronic device in a network environment, according to an embodiment of the disclosure.
FIG. 2 illustrates an electronic device in a closed state, according to an embodiment of the disclosure.
FIG. 3 illustrates an electronic device in an open state, according to an embodiment of the disclosure.
FIG 4 is an exploded perspective view of an electronic device according to an embodiment of the disclosure.
FIG. 5 is a schematic diagram of a dot code pattern according to an embodiment of the disclosure.
FIG. 6 is a schematic diagram for explaining the operation of a sensor module according to an embodiment of the disclosure.
FIG. 7 is a cross-sectional perspective view of an electronic device including a dot code pattern arranged in a multi-bar structure, according to an embodiment of the disclosure.
FIG. 8A is a cross-sectional view of an electronic device including a dot code pattern located in a multi-bar structure of the electronic device in an open state, according to an embodiment of the disclosure.
FIG. 8B is a cross-sectional view of an electronic device including a dot code pattern located in a multi-bar structure of the electronic device in a closed state, according to an embodiment of the disclosure.
FIG. 9 is a perspective view of a multi-bar structure in which a dot code pattern is located, according to an embodiment of the disclosure.
FIGS. 10A and 10B are cross-sectional views of an electronic device including a dot code pattern and a multi-bar structure, according to an embodiment of the disclosure.
FIG. 11 is a perspective view of an electronic device in a closed state and including a dot code pattern located in a housing, according to an embodiment of the disclosure.
FIG. 12 is a front view of an electronic device in a closed state and including a dot code pattern located in a housing, according to an embodiment of the disclosure.
FIG. 13 is a perspective view of an electronic device in an open state and including a dot code pattern located in a housing, according to an embodiment of the disclosure.
FIG. 14 is a front view of an electronic device in an open state and including a dot code pattern located in a housing, according to an embodiment of the disclosure.
FIG. 15A is a projection of the interior of an electronic device in a closed state, according to an embodiment of the disclosure.
FIG. 15B is a projection of the interior of an electronic device in an open state, according to an embodiment of the disclosure.
FIG. 16 is a schematic diagram of an electronic device including a light reflection member, according to an embodiment of the disclosure.
FIGS. 17A, 17B, and 17C are schematic diagrams of an electronic device including a dot code pattern moving through a sensor hole.
FIG. 18 is a schematic diagram of a dot code pattern according to an embodiment of the disclosure.
FIGS. 19A, 19B, 19C, and 19D explain an operation of determining location information and direction information reflected by a dot code pattern, according to an embodiment of the disclosure.
FIG. 20 is a flowchart for explaining the operation of an electronic device according to an embodiment of the disclosure.
FIG. 21 is a graph illustrating current consumed to determine a dot code pattern according to an embodiment of the disclosure.

### [Mode for Carrying out the Invention]

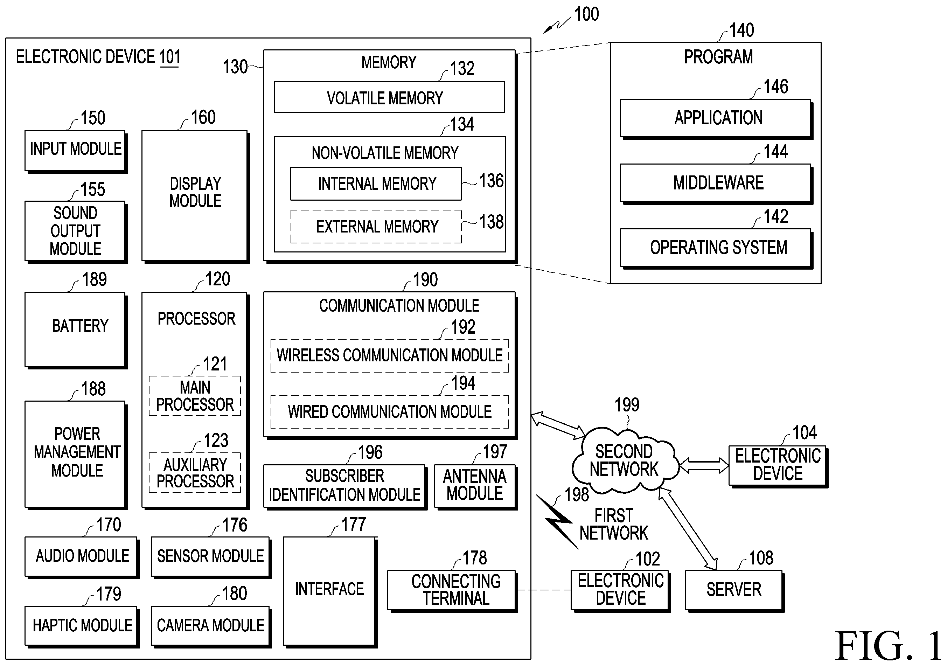

FIG. 1 is a block diagram illustrating an electronic device in a network environment according to embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to, " "connected with, "* or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

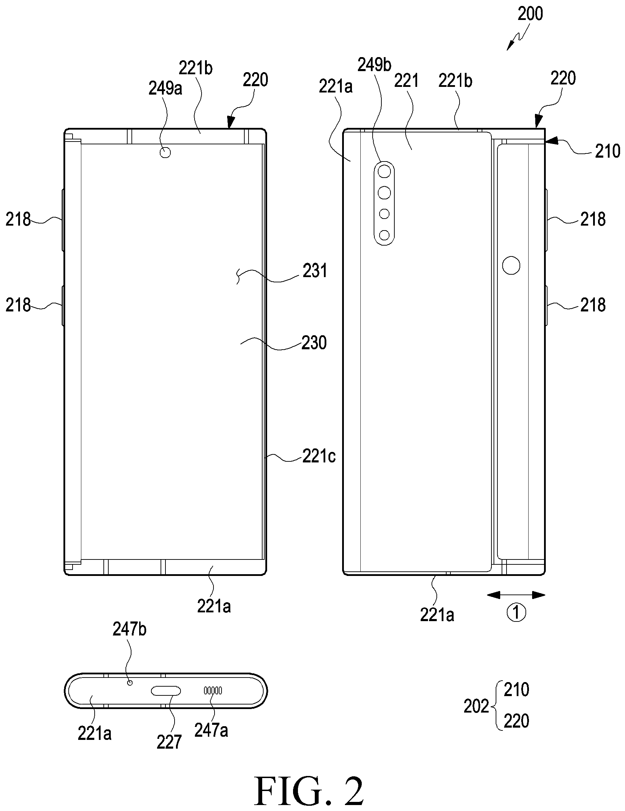

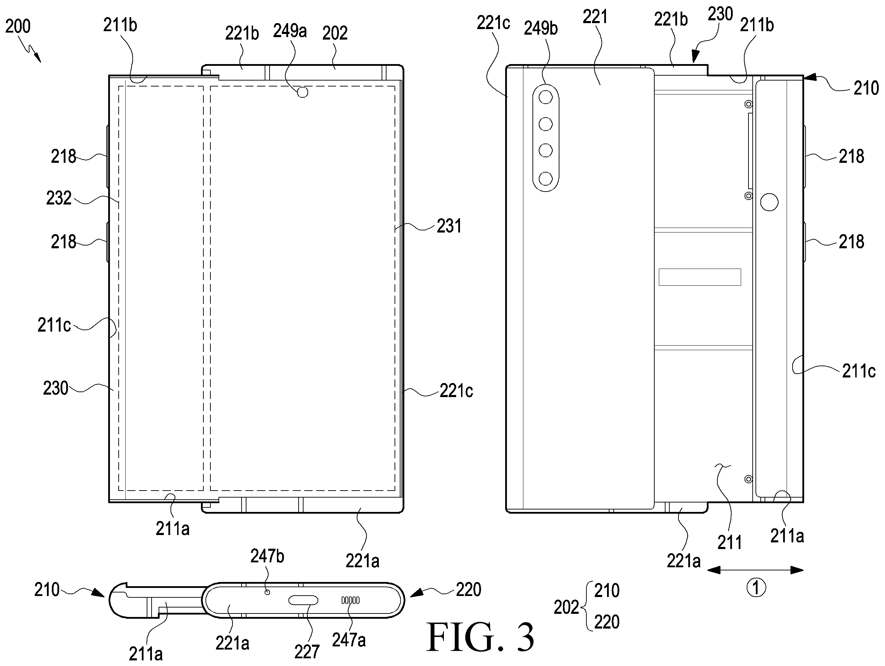

FIG. 2 illustrates an electronic device in a closed state, according to an embodiment of the disclosure. FIG. 3 illustrates an electronic device in an open state, according to an embodiment of the disclosure. For example, FIG. 2 illustrates a state in which the second display area 232 is stored in the housing 202. FIG. 3 illustrates a state in which at least a portion of the second display area 232 is visually exposed to the outside of the housing 202.

The state shown in FIG. 2 may be referred to as the first housing 210 being closed with respect to the second housing 220, and the state shown in FIG. 3 may be referred to as the first housing 210 being open with respect to the second housing 220. Depending on the embodiment, "closed state" or "open state" may refer to a state in which the electronic device is closed or open.

Referring to FIGS. 2 and 3, the electronic device 200 includes a housing 202. The housing 202 includes a second housing 220 and a first housing 210 movable with respect to the second housing 220. In some embodiments, the electronic device 200 may be interpreted as a structure in which the second housing 220 is arranged to be slidably movable on the first housing 210. According to an embodiment, the first housing 210 may be arranged to reciprocate a certain distance in the direction shown based on the second housing 220, for example, in the direction indicated by arrow ①. The configuration of the electronic device 200 in FIGS. 2 and 3 may be entirely or partially the same as the configuration of the electronic device 101 of FIG. 1.

According to various embodiments, the first housing 210 may be referred to as, for example, a first structure, a slide part, or a slide housing, and may be disposed to reciprocate with respect to the second housing 220. According to an embodiment, the second housing 220 may be referred to as, for example, a second structure, a main part, or a main housing. The second housing 220 may accommodate at least a part of the first housing 210 and guide the sliding movement of the first housing 210. According to an embodiment, the second housing 220 may accommodate various electrical and electronic components such as a main circuit board or a battery. According to an embodiment, a part (e.g., the first display area 231) of the display 230 may be visually exposed to the outside of the housing 202. According to an embodiment, as another part (e.g., the second display area 232) of the display 230 may be stored inside (e.g., via a slide-in operation) the second housing 220, or visually exposed to the outside (e.g., via a slide-out operation) of the second housing 220 as the first housing 210 moves (e.g., slides) with respect to the second housing 220.

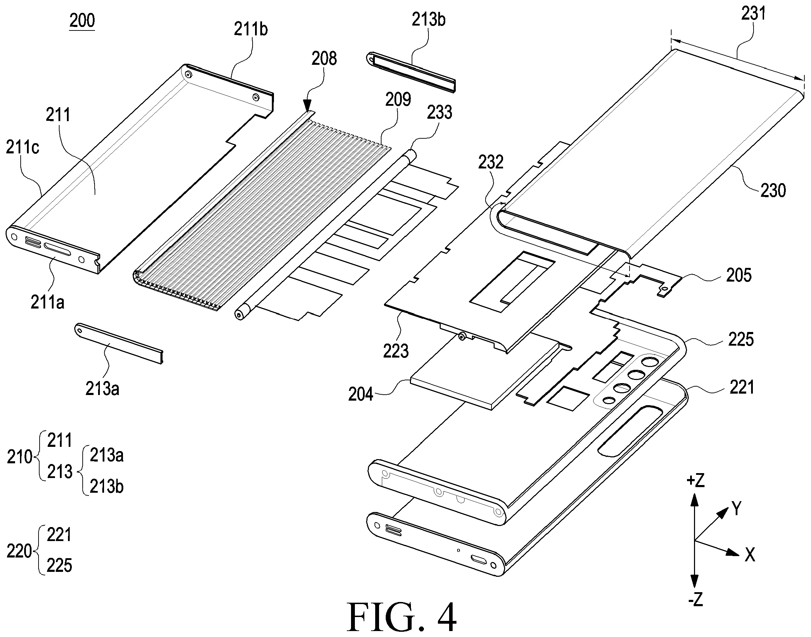

According to an embodiment, the first housing 210 may include first side walls 211a, 211b, 211c to surround at least a part of the display 230 and/or the multi-bar structure (e.g., the multi-bar structure 208 in FIG. 4). According to an embodiment, the first side walls 211a, 211b, 211c may extend from a first support member 211. The first side walls 211a, 211b, 211c may include a (1-1)th side wall 211a, a (1-2)th side wall 211b opposite to the (1-1)th side wall 211a, and a (1-3)th side wall 211c extending from the (1-1)th side wall 211a to the (1-2)th side wall 211b. According to an embodiment, the (1-3)th side wall 211c may be substantially perpendicular to the (1-1)th side wall 211a and/or the (1-2)th side wall 211b. According to an embodiment, when the electronic device 200 is in a closed state (e.g., FIG. 2), the (1-1)th side wall 211a may face a (2-1)th side wall 221a of the second housing 220, and the (1-2)th side wall 211b may face a (2-2)th side wall 221b of the second housing 220. According to an embodiment, the first support member 211, the (1-1)th side wall 211a, the (1-2)th side wall 211b, and/or the (1-3)th side wall 211c may be integrated with each other. According to another embodiment, the first support member 211, the (1-1)th side wall 211a, the (1-2)th side wall 211b, and/or the (1-3)th side wall 211c may be formed as individual housings to be combined or assembled together.

According to an embodiment, the second housing 220 may include second side walls 221a, 221b, 221c to surround at least a part of the first housing 210. According to an embodiment, the second side walls 221a, 221b, 221c may extend from a rear plate 221. According to an embodiment, the second side walls 221a, 221b, 221c may include the (2-1)th side wall 221a, the (2-2)th side wall 221b opposite to the (2-1)th side wall 221a, and a (2-3)th side wall 221c extending from the (2-1)th side wall 221a to the (2-2)th side wall 221b. According to an embodiment, the (2-3)th side wall 221c may be substantially perpendicular to the (2-1)th side wall 221a and/or the (2-2)th side wall 221b. According to an embodiment, the (2-1)th side wall 221a may face the (1-1)th side wall 211a, and the (2-2)th side wall 221b may face the (1-2)th side wall 211b. For example, when the electronic device 200 is in a closed state (e.g., FIG. 2), the (2-1)th side wall 221a may cover at least a part of the (1-1)th side wall 211a, and the (2-2)th side wall 221b may cover at least a part of the (1-2)th side wall 211b.

According to an embodiment, the (2-1)th side wall 221a, the (2-2)th side wall 221b, and the (2-3)th side wall 221c may include one side (e.g., the front face) which is opened to accommodate (or surround) at least a part of the first housing 210. For example, the first housing 210 may be connected to the second housing 220 while being at least partially surrounded by the second housing 220, and may slide in the direction of arrow ① while being guided by the second housing 220. According to an embodiment, the rear plate 221, the (2-1)th side wall 221a, the (2-2)th side wall 221b, and/or the (2-3)th side wall 221c may be integrated with each other. According to another embodiment, the rear plate 221, the (2-1)th side wall 221a, the (2-2)th side wall 221b, and/or the (2-3)th side wall 221c may be formed as individual housings to be combined or assembled together.

According to an embodiment, the rear plate 221 and/or the (2-3)th side walls 221c may cover at least a part of the display 230. For example, at least a part of the display 230 may be accommodated inside the second housing 220, and the rear plate 221 and/or the (2-3)th side wall 221c may cover a part of the display 230 stored in the second housing 220.

According to an embodiment, the electronic device 200 may include the display 230. For example, the display 230 may be interpreted as a flexible display or a rollable display. According to an embodiment, at least a part (e.g., the second display area 232) of the display 230 may slide based on the sliding movement of the first housing 210. According to an embodiment, the display 230 may include a touch detection circuit, a pressure sensor capable of measuring the intensity (pressure) of touch, and/or a digitizer that detects a magnetic field-type stylus pen, or may be disposed adjacent thereto. The configuration of the display 230 in FIGS. 2 and 3 may be entirely or partially the same as the configuration of the display module 160 in FIG. 1.

According to various embodiments, the display 230 may include the first display area 231 and the second display area 232. According to an embodiment, at least a part of the first display area 231 may be disposed on the second housing 220. For example, the first display area 231 may be an area that is always visible from the outside. According to an embodiment, the first display area 231 may be interpreted as an area that may not be allowed to be located inside the housing 202. According to an embodiment, the second display area 232 may extend from the first display area 231 and may be inserted or stored into the second housing 220 according to the sliding movement of the first housing 210 and may be visually exposed to the outside of the second housing 220.

According to an embodiment, the second display area 232 may move while being guided by a multi-bar structure (e.g., the multi-bar structure 208 in FIG. 4) substantially mounted within the first housing 210, to be stored in the second housing 220 or in a space formed between the first housing 210 and the second housing 220 or may be visually exposed to the outside. According to an embodiment, the second display area 232 may move based on the sliding movement of the first housing 210 in the first direction (e.g., the direction indicated by arrow ①). For example, at least a part of the second display area 232 may be unfolded or rolled together with the multi-bar structure 208, based on the sliding movement of the first housing 210.

According to various embodiments, when viewed from the top of the first housing 210, the second display area 232 may gradually be exposed to the outside of the housing 202 and form a substantially flat surface together with the first display area 231 according to transition of the first housing 210 from the closed state to the open state. In an embodiment, the second display area 232 may be at least partially accommodated inside the first housing 210 and/or the second housing 220.

According to various embodiments, the electronic device 200 may include at least one key input device 218, a connector hole 227, an audio module 247a, 247b, or a camera module 249a, 249b. Although not shown, the electronic device 200 may further include an indicator (e.g., an LED device) or various sensor modules. The configurations of the audio module 247a, 247b and the camera module 249a, 249b in FIGS. 2 and 3 may be entirely or partially the same as the configurations of the audio module 170 and the camera module 180 in FIG. 1.

According to an embodiment, the key input device 218 may be positioned in one area of the first housing 210. Depending on the appearance and usage conditions, the electronic device 200 may be designed to have the illustrated key input device 218 omitted therefrom or include an additional key input device(s). According to an embodiment, the electronic device 200 may include an unillustrated key input device, for example, a home key button, or a touch pad disposed around the home key button. According to another embodiment (not shown), at least a part of the key input device 218 may be disposed on the second housing 220.

According to various embodiments, the connector hole 227 may be omitted depending on the embodiment, or may accommodate a connector (e.g., a USB connector) for transmitting and receiving power and/or data to and from an external electronic device. Although not shown, the electronic device 200 may include a plurality of connector holes 227, and some of the plurality of connector holes 227 may function as connector holes for transmitting and receiving audio signals to and from an external electronic device. In the illustrated embodiment, the connector hole 227 is disposed in the (2-1)th sidewall 221a, but the disclosure is not limited thereto, and the connector hole 227 or an unillustrated connector hole may be disposed in the (2-2)th side wall 221b or the (2-3)th side wall 221c.

According to various embodiments, the audio module 247a, 247b may include one or more speaker holes 247a or one or more microphone holes 247b. One of the speaker holes 247a may be provided as an external speaker hole, and the other one (not shown) may be provided as a receiver hole for voice calls. The electronic device 200 may include a microphone for acquiring sound, and the microphone may acquire sound outside the electronic device 200 through the microphone hole 247b. According to an embodiment, the electronic device 200 may include a plurality of microphones to detect the direction of sound. According to an embodiment, the electronic device 200 may include an audio module including the speaker hole 247a and the microphone hole 247b implemented as one hole, or may include a speaker excluding the speaker hole 247a (e.g., a piezo speaker).

According to an embodiment, the camera module 249a, 249b may include a first camera module 249a and/or a second camera module 249b. The second camera module 249b may be located in the second housing 220 and may capture a subject in a direction opposite to the first display area 231 of the display 230. The electronic device 200 may include a plurality of camera modules 249a and 249b. For example, the electronic device 200 may include at least one of a wide-angle camera, a telephoto camera, or a macro camera, and, depending on the embodiment, may include an infrared projector and/or an infrared receiver to measure the distance to the subject. The camera modules 249a, 249b may include one or more lenses, an image sensor, and/or an image signal processor. The electronic device 200 may further include another camera module (the first camera module 249a, e.g., a front camera) configured to photograph a subject in a direction opposite to the second camera module 249b. For example, the first camera module 249a may be placed around the first display area 231 or in an area overlapping with the first display area 231 and may photograph a subject through the display 230 when placed in an area overlapping with the display 230.

According to various embodiments, an indicator (not shown) of the electronic device 200 may be disposed in the first housing 210 and/or the second housing 220, and may include a light emitting diode to display state information of the electronic device 200 as a visual signal. The sensor module (e.g., the sensor module 176 in FIG. 1) of the electronic device 200 may generate an electrical signal or data value corresponding to the internal operating state or the external environmental state of the electronic device 200. The sensor module may include, for example, a proximity sensor, a fingerprint sensor, or a biometric sensor (e.g., an iris/facial recognition sensor or an HRM sensor). In another embodiment, the electronic device 200 may further include at least one of a gesture sensor, a gyro sensor, a barometric pressure sensor, a magnetic sensor, an acceleration sensor, a grip sensor, a color sensor, an infrared (IR) sensor, a temperature sensor, a humidity sensor, or an illumination sensor.

FIG. 4 is an exploded perspective view of an electronic device according to an embodiment of the disclosure.

Referring to FIG. 4, the electronic device 200 may include the first housing 210, the second housing 220, the display 230, and a multi-bar structure 208. A part (e.g., the second display area 232) of the display 230 may be stored inside the electronic device 200 while being guided by the multi-bar structure 208. The configuration of the first housing 210, the second housing 220, and the display 230 in FIG. 4 may be entirely or partially the same as the configuration of the first housing 210, the second housing 220, and the display 230 in FIGS. 2 and/or 3.

According to an embodiment, the first housing 210 may include a first support member 211 (e.g., a slide plate). According to an embodiment, the first support member 211 may be slidably connected to the second housing 220. According to an embodiment, the first support member 211 may include a metallic material and/or a non-metallic (e.g., polymer) material.

According to an embodiment, the first housing 210 includes at least one guide rail 213. According to an embodiment, the guide rail 213 may guide the movement of the multi-bar structure 208. For example, the guide rail 213 may include a groove or recess for receiving at least a part of the multi-bar structure 208, and the guide rail 213 may slide with respect to the second housing 220 while being at least partially accommodated in the first housing 210. According to an embodiment, the guide rail 213 may be disposed on the first support member 211 and/or the first side wall 211a, 211b. For example, the guide rail 213 may include a first guide rail 213a disposed on the (1-1)th side wall 211a, and a second guide rail 213b disposed on the (1-2)th side wall 211b. According to an embodiment, at least a part of the first guide rail 213a may be located between the (1-1)th side wall 211a and the multi-bar structure 208, and at least a part of the second guide rail 213b may be located between the (1-2)th side wall 211b and the multi-bar structure 208.

According to an embodiment, the multi-bar structure 208 may move with respect to the second housing 220 according to the sliding movement of the first housing 210. In a closed state (e.g., FIG. 2), the multi-bar structure 208 may be substantially accommodated inside the second housing 220. According to an embodiment, the multi-bar structure 208 may be interpreted as a multi-joint hinge structure.

According to an embodiment, the multi-bar structure 208 may include a plurality of bars or rods 209. The plurality of bars or rods 209 may extend in a straight line and be arranged along the direction in which the first housing 210 slides.

According to an embodiment, each bar 209 may rotate around a bar 209 adjacent thereto while maintaining a parallel state with the bar 209 adjacent thereto. According to an embodiment, according to the sliding movement of the first housing 210, the plurality of bars 209 may be arranged in a curved shape or in a planar shape. For example, the sliding movement of the first housing 210, a part of the multi-bar structure 208 facing the (1-3)th side wall 211c may form a curved surface, and another part of the multi-bar structure 208 that does not face the (1-3)th side wall 211c may form a flat surface. According to an embodiment, the second display area 232 of the display 230 may be mounted or supported on the multi-bar structure 208. When the second display area 232 is visually exposed to the outside of the second housing 220, at least a part of the multi-bar structure 208 may form a substantially flat surface, whereby the second display area 232 may be supported or maintained in a flat state. According to an embodiment, the multi-bar structure 208 may be replaced with a flexible, integrated support member (not shown). According to an embodiment, the multi-bar structure 208 may be interpreted as a multi-joint hinge structure.

According to an embodiment, the second housing 220 may include a rear plate 221, a second display support member 223, and/or a second support member 225. According to an embodiment, the rear plate 221 may form at least part of the exterior of the electronic device 200 or the second housing 220. For example, the rear plate 221 may provide a decorative effect on the exterior of the electronic device 200. According to an embodiment, the second display support member 223 may support at least a part of the display 230. According to an embodiment, the first display area 231 may be disposed on the second display support member 223. According to an embodiment, the second support member 225 may support components (e.g., the battery 204 and/or the printed circuit board 205) of the electronic device 200. For example, the battery 204 and the printed circuit board 205 may be disposed between the second display support member 223 and the second support member 225. According to an embodiment, when the electronic device 200 is in a closed state, at least a part of the first housing 210 may be disposed between the display support member 223 and the second support member 225. According to an embodiment, the second housing 220 (e.g., the rear plate 221, the second display support member 223, and/or the second support member 225) may be made using at least one of a metal, glass, a synthetic resin, or a ceramic. According to an embodiment, the rear plate 221 and the second support member 225 may be integrated with each other. According to an embodiment, the printed circuit board 205 may accommodate at least one of the components (e.g., the processor 120 in FIG. 1) of the electronic device 200. According to an embodiment, the battery 204 may supply power to at least one of the components (e.g., the processor 120 in FIG. 1) of the electronic device 200.

According to an embodiment, the electronic device 200 may include the first display support member 233. According to an embodiment, the first display support member 233 may be interpreted as a display support bar (DSB). According to an embodiment, the first display support member 233 may be disposed in the first housing 210. For example, the first display support member 233 may slide with respect to the second housing 220 together with the first housing 210. According to an embodiment, the first display support member 233 may support at least a part (e.g., the first display area 232) of the display 230. For example, at least a part of the display 230 and/or at least a part of the multi-bar structure 208 may be positioned between the first support member 211 of the first housing 210 and the first display support member 233. According to an embodiment, the first display support member 233 may be connected to the first housing 210. For example, the first display support member 233 may be disposed on the first support member 211, and at least a part thereof may be disposed substantially parallel to the (1-3)th side walls 211c. According to an embodiment, the first display support member 233 may be interpreted as a part of the first housing 210. According to an embodiment, the first display support member 233 may be connected to at least one guide rail 213. According to an embodiment, when the first display support member 233 slides with respect to the second housing 220, the at least one guide rail 213 may slide with respect to the second housing 220 together with the first display support member 233. When the at least one guide rail 213 moves, at least a part of the multi-bar structure 208 may receive force or pressure provided by the guide rail 213. The display 230 connected to the multi-bar structure 208 may be unfolded or rolled based on the sliding movement of the first display support member 233.

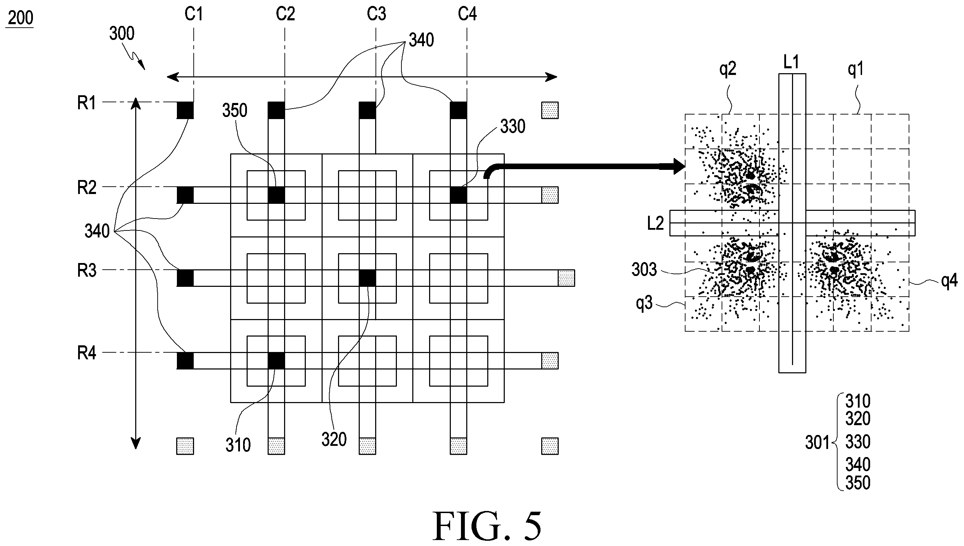

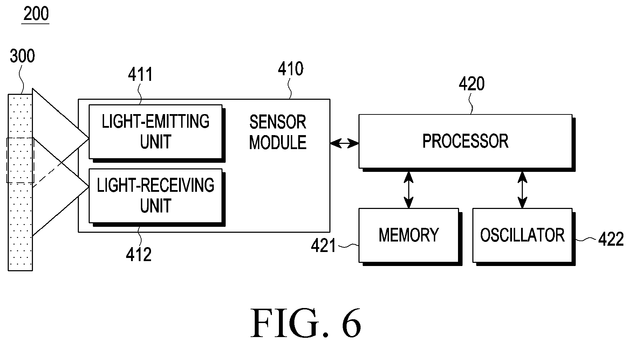

FIG. 5 is a schematic diagram of a dot code pattern, according to an embodiment of the disclosure. FIG. 6 is a schematic diagram for explaining the operation of a sensor module according to an embodiment of the disclosure.

Referring to FIGS. 5 and 6, the electronic device 200 includes a sensor module 410 for detecting a dot code pattern 300, and a processor 420 for determining information reflected by the code pattern 300, by using the sensor module 410. The configuration of the processor 420 and the sensor module 410 in FIG. 6 may be entirely or partially the same as the configuration of the processor 120 and the sensor module 176 in FIG. 1.

According to an embodiment, the dot code pattern 300 may include at least one dot area 301. The dot code pattern 300 may be interpreted as a recognition code including the at least one dot area 301 to provide designated information. According to an embodiment, the information indicated by the dot code pattern 300 may be changed based on the arrangement of the dot area 301 and/or the arrangement of a plurality of dots 303 located in each dot area 301. According to an embodiment, the dot code pattern 300 may include a plurality of dot areas 301 arranged in a designated shape. According to an embodiment, the plurality of dot areas 301 may be arranged in 4 rows and 4 columns. For example, the dot code pattern 300 may be arranged in a 4X4 matrix shape.

According to an embodiment, each dot area 301 may include a first reference line (L1) and a second reference line (L2) perpendicular to the first reference line (L1). According to an embodiment, the first reference line (L1) and the second reference line (L2) may be virtual lines to provide a quadrant. For example, each dot area 301 may include a first quadrant (q1), a second quadrant (q2), a third quadrant (q3), and a fourth quadrant (q4).

The dot area 301 includes a plurality of dots 303. According to an embodiment, the plurality of dots 303 may be positioned in the first quadrant (q1), the second quadrant (q2), the third quadrant (q3), and/or the fourth quadrant (q4).

According to an embodiment, each dot area 301 may indicate information and/or data, based on the plurality of dots 303. For example, the plurality of dots 303 may be interpreted as 1 when located in one quadrant, and the plurality of dots 303 may be interpreted as 0 when not located in the one quadrant. For example, one quadrant may indicate or reflect 1 bit of information. According to an embodiment, one dot area 301 may indicate or reflect four bits of information. According to an embodiment, the information included in the dot area 301 may include first information for providing the location of the dot code pattern 300 to the processor 420. According to an embodiment, the dot area 301 may include a plurality of dot areas (e.g., the first dot area 310, the second dot area 320, and the third dot area 330) for indicating or reflecting first information. For example, the first dot area 310 may indicate first information reflecting the location information of the first dot area 310 and/or the dot code pattern 300 where the first dot area 310 is located.

According to an embodiment, the dot code pattern 300 may include at least one dot area 301 to provide a reference location of the dot code pattern 300. According to an embodiment, the at least dot area 301 located in a first row (R1) or a first column (C1) of the dot code pattern 300 may provide a grid of the dot code pattern 300. For example, among the dot area 301, at least one fourth dot area 340 located in the first row (R1) or the first column (C1) may include a plurality of dots 303 having a designated arrangement to provide a reference location. According to an embodiment, the fourth dot area 340 for providing the reference location of the dot code pattern 300 may be interpreted as a grid dot area, and information for providing the reference position of the dot code pattern 300 reflected by the grid dot area may be interpreted as second information.

According to an embodiment, the dot code pattern 300 may include at least one dot area 301 for identifying check of information. According to an embodiment, the dot code pattern 300 may include a fifth dot area 350 including a plurality of dots 303 for indicating designated information. For example, the fifth dot area 350 may be interpreted as a checksum bit and/or a parity bit. According to an embodiment, the fifth dot area 350 may be positioned in a second row (R2) and a second column (C2).

According to an embodiment, the dot areas 301 of the dot code pattern 300 may be arranged based on an optical identification (OID) code.

The sensor module 410 is adapted to detect the dot code pattern 300. For example, the sensor module 410 is adapted to detect the plurality of dots 303 located in the dot area 301 of the dot code pattern 300. According to an embodiment, the sensor module 410 may include a light-emitting unit 411 for emitting light to the dot code pattern 300, and a light-receiving unit 412 for obtaining light reflected from the dot code pattern 300. According to an embodiment, the light-emitting unit 411 may include an infrared light emitting diode (LED). According to an embodiment, the light-receiving unit 412 may be an image sensor. For example, the light-receiving unit 412 may include a complementary metal oxide semiconductor (CMOS) image sensor and/or a charge coupled device (CCD) image sensor. According to an embodiment, the light-receiving unit 412 may include an infrared filter.

The processor 420 is adapted to recognize a plurality of dots 303 located in the dot area 301 by using the sensor module 410. According to an embodiment, the processor 420 may detect information reflected by the dot code pattern 300 (e.g., first information, second information, and/or third information).

According to an embodiment, the processor 420 may determine the slide distance of the first housing (e.g., the first housing 210 in FIG. 2), based on the information reflected by the first pattern area 310, the second pattern area 320, and/or the third pattern area 330 detected by the sensor module 410. For example, the processor 420 may determine the location of each pattern area 310, 320, 330 by decoding the plurality of dots 303 located in the pattern areas 310, 320, 330. The processor 420 is adapted to determine the distance between the first housing 210 and the second housing (e.g., the second housing 220 in FIG. 2). According to an embodiment, the processor 420 may select a pattern area (e.g., the first pattern area 310, the second pattern area 320, and/or the third pattern area 330) for acquiring the first information, based on the second information reflected by the fourth pattern area 340 detected by the sensor module 410. According to an embodiment, the processor 120 may adjust content displayed on the display 230, based on the determined slide distance. For example, the processor 120 may adjust the screen ratio of the content displayed on the display 230 in the width direction (the X-axis direction) and the length direction (the Y-axis direction).

According to an embodiment, the processor 420 may determine an error in the dot code pattern 300. For example, the processor 420 may determine whether an error (e.g., printing defect) exists in at least a part of the dot code patterns 300, based on the information reflected by the fifth pattern area 350. According to an embodiment, when third information obtained from the fifth pattern area 350 is determined to be an error, the processor 420 may not use the pattern areas 310, 320, 330 adjacent to the fifth pattern area 350 reflecting the third information determined to be an error.

According to an embodiment, the electronic device 200 may include memory 421 (e.g., the memory 130 in FIG. 1). According to an embodiment, the memory 421 may include information or a code for decoding information reflected by the dot code pattern 300. For example, the processor 420 may decode the first information reflected by the dot code pattern 300 as a distance between the first housing (e.g., the first housing 210 in FIG. 2) and the second housing (e.g., the second housing 220 in FIG. 2), by using the information or code stored in the memory 421. According to an embodiment, the memory 421 may store the location information reflected by the dot area 301 and/or the location of the sensor module 410. According to an embodiment, the memory 421 may store the operation algorithm of the processor 420. According to an embodiment, the electronic device 200 may include an oscillator 422. The oscillator 422 may generate a frequency for decoding by the processor 420.

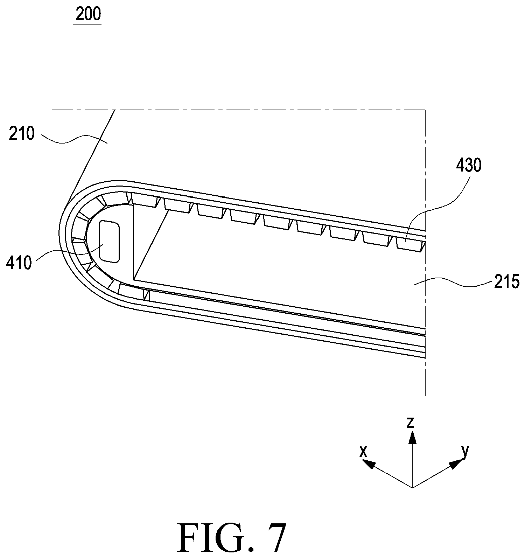

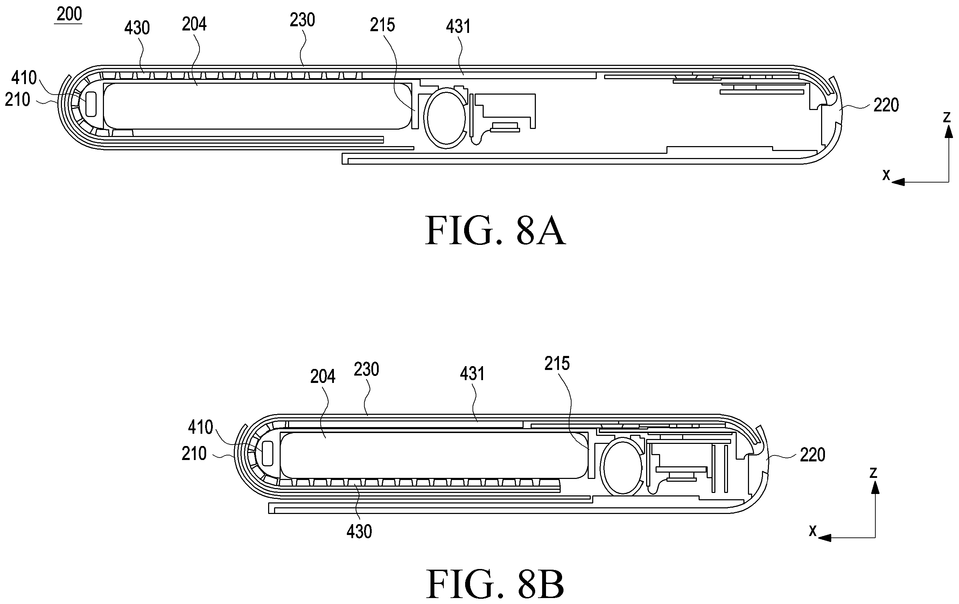

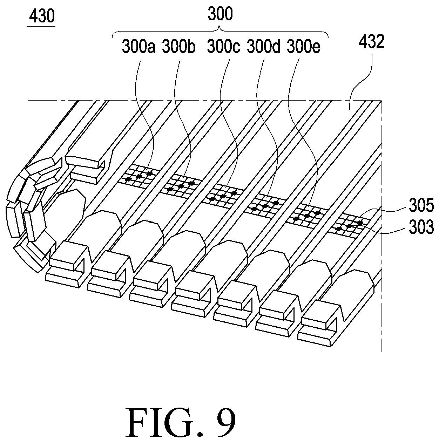

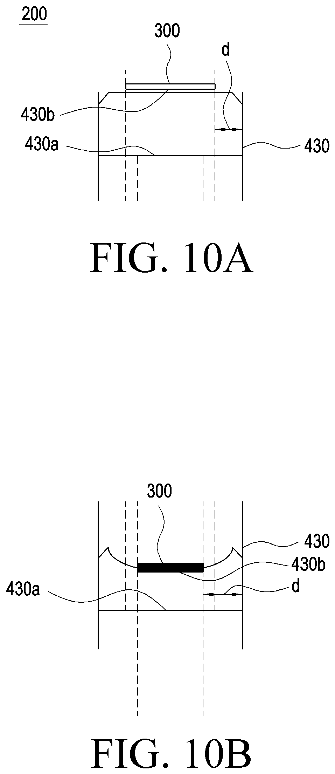

FIG. 7 is a cross-sectional perspective view of an electronic device including a sensor module for sensing a dot code pattern located on a multi-bar structure, according to an embodiment of the disclosure. FIG. 8A is a cross-sectional view of an electronic device including a dot code pattern located in a multi-bar structure of the electronic device in an open state, according to an embodiment of the disclosure. FIG. 8B is a cross-sectional view of an electronic device including a dot code pattern located in a multi-bar structure of the electronic device in a closed state, according to an embodiment of the disclosure. FIG. 9 is a perspective view of a multi-bar structure in which a dot code pattern is located, according to an embodiment of the disclosure. FIGS. 10A and 10B are cross-sectional views of an electronic device including a dot code pattern and a multi-bar structure, according to an embodiment of the disclosure.

Referring to FIGS. 7 to 10B, the electronic device 200 includes the first housing 210, the second housing 220, the flexible display 230, the dot code pattern 300, the sensor module 410, and a multi-bar structure 430. The configuration of the first housing 210, the second housing 220, the display 230, and the multi-bar structure 430 in FIGS. 7, 8A, 8B, 9, 10A, and/or 10B may be entirely or partially the same as the configuration of the first housing 210, the second housing 220, the display 230, and the multi-bar structure 208 in FIG. 4, and the configuration of the dot code pattern 300 and the sensor module 410 in FIGS. 7, 8A, 8B, 9, 10A and/or 10B may be entirely or partially the same as the configuration of the dot code pattern 300 and the sensor module 410 in FIGS. 5 and/or 6.

According to an embodiment, the dot code pattern 300 may be positioned in the multi-bar structure 430. For example, the multi-bar structure 430 may include a first surface 430a facing at least a part of the display 230, and a second surface 430b opposite to the first surface 430a. According to an embodiment, the dot code pattern 300 may be disposed on the second surface 430b. The dot code pattern 300 includes a plurality of dot code patterns 300a, 300b, 300c, 300d, 300e arranged on the bars 432 of the multi-bar structure 430 (e.g., the bars 209 in FIG. 4).

According to an embodiment, the shape of the multi-bar structure 430 may be variable. According to an embodiment (e.g., FIG. 10A), the second surface 430b of the dot code pattern 300 may be substantially flat. According to an embodiment (e.g., FIG. 10b), at least a part of the second surface 430b of the dot code pattern 300 may have a curved surface. According to an embodiment, the accuracy of the sensor module 410 of the electronic device 200 (e.g., FIG. 10B) including the second surface 430b having an at least partially curved surface may be higher than that of the electronic device 200 (e.g., FIG. 10A) including the substantially flat second surface 430b. For example, when the second surface 430b has a curved surface, the light reception rate of the sensor module 410 may be improved, and the spacing (d) between the plurality of dot code patterns 300a, 300b, 300c, 300d, 300e may increase. The spacing (d) between the plurality of dot code patterns 300a, 300b, 300c, 300d, 300e may be interpreted as an area where the plurality of dots 303 are not located (e.g., a quiet zone).

According to an embodiment, the dot code pattern 300 may include an adhesive film 305. For example, the dot code pattern 300 may include the adhesive film 305 and the plurality of dots 303 printed on the adhesive film 305.

According to an embodiment, the sensor module 410 may move with respect to the dot code pattern 300. For example, the location of the dot code pattern 300 detected by the sensor module 410 may vary based on the sliding movement of the first housing (e.g., the first housing 210 in FIG. 2) with respect to the second housing (e.g., the second housing 220 in FIG. 2). According to an embodiment, the dot code pattern 300 may be disposed in the multi-bar structure 430. The sensor module 410 may be arranged to face the dot code pattern 300. According to an embodiment, the multi-bar structure 430 may be rolled or unfolded while having an end 431 connected to the second housing 220. The sensor module 410 may face at least a part of the second surface 430b of the multi-bar structure 430. According to an embodiment, the sensor module 410 may slide in the width direction of the electronic device 200, based on the movement of the first housing 210. For example, the sensor module 410 may be disposed on a third support member 215 positioned within the first housing 210. The third support member 215 may support a component (e.g., the battery 204) of the electronic device 200. According to an embodiment, the area of the dot code pattern 300 facing the sensor module 410 may vary based on the movement of the first housing 210. For example, when the electronic device 200 is in an open state (e.g., FIG. 8A), the sensor module 410 may face a part (e.g., the fifth dot code pattern 300e) of the dot code pattern 300 and, when the electronic device 200 is in a closed state (e.g., FIG. 8B ), the sensor module 410 may face a part (e.g., the first dot code pattern 300a) of the dot code pattern 300. For example, when the electronic device 200 transitions from a closed state to an open state, the sensor module 410 may detect the dot code pattern 300 in the order of the first dot code pattern 300a, the second dot code pattern 300b, the third dot code pattern 300b, the fourth dot code pattern 300c, and the fifth dot code pattern 300e.

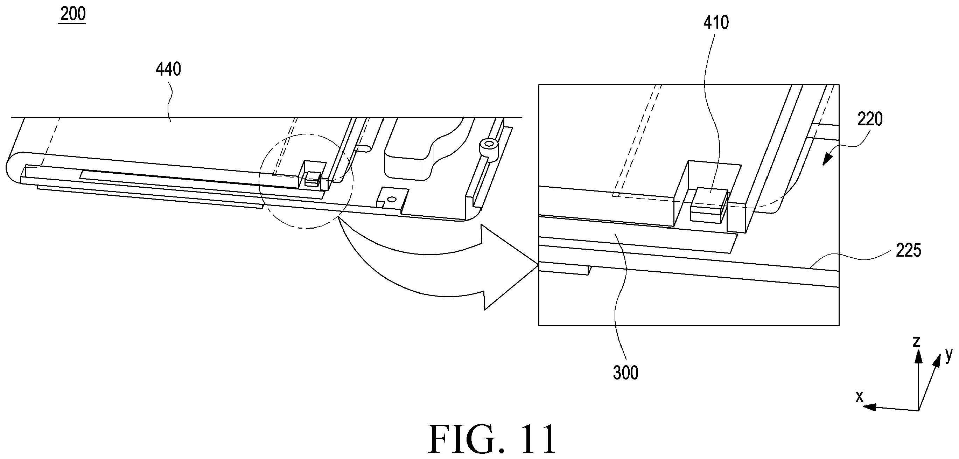

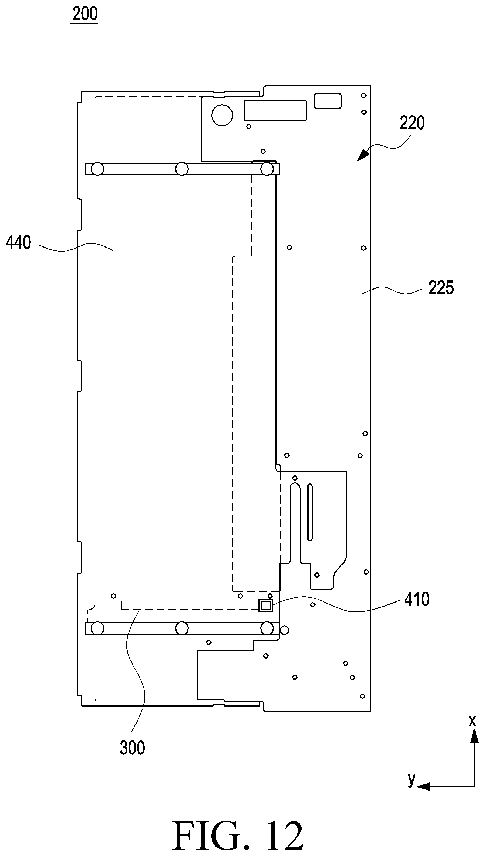

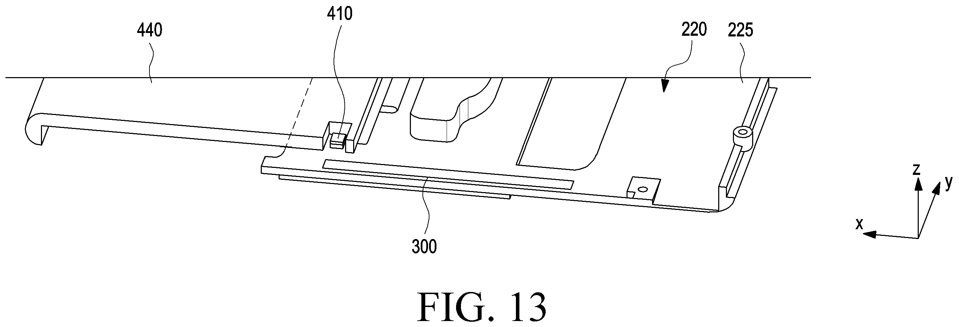

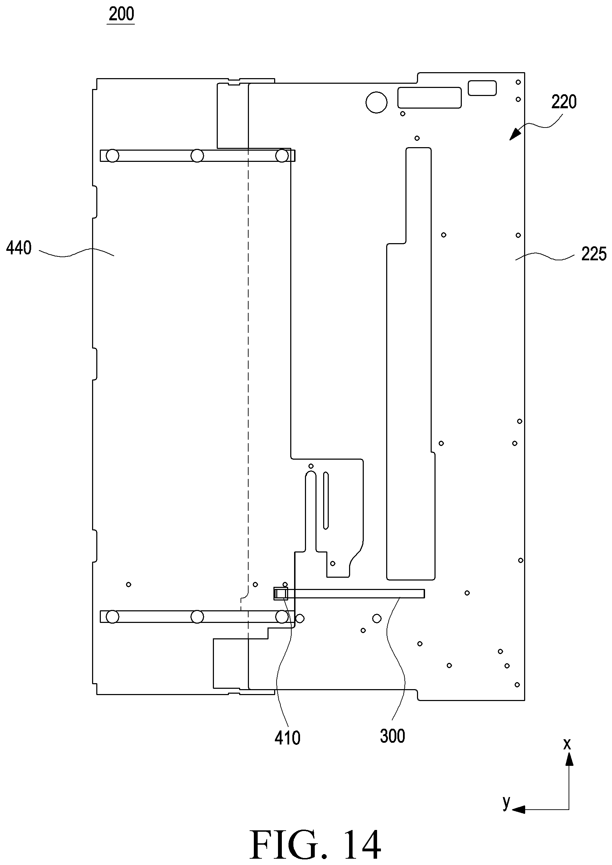

FIG. 11 is a perspective view of an electronic device in a closed state and including a dot code pattern located in a housing, according to an embodiment of the disclosure. FIG. 12 is a front view of an electronic device in a closed state and including a dot code pattern located in a housing, according to an embodiment of the disclosure. FIG. 13 is a perspective view of an electronic device in an open state and including a dot code pattern located in a housing, according to an embodiment of the disclosure. FIG. 14 is a front view of an electronic device in an open state and including a dot code pattern located in a housing, according to an embodiment of the disclosure.

Referring to FIGS. 11 to 14, the electronic device 200 includes the second housing 220, the dot code pattern 300, the sensor module 410, and may include a display support member 440.

The configuration of the second housing 220 and the display support member 440 in FIGS. 11 to 14 may be entirely or partially the same as the configuration of the second housing 220 and the first display support member 233 in FIG. 4, and the configuration of the dot code pattern 300 and the sensor module 410 in FIGS. 11 to 14 may be entirely or partially the same as the configuration of the dot code pattern 300 and the sensor module 410 in FIG. 6.

According to an embodiment, the dot code pattern 300 may move with respect to the sensor module 410, e.g. upon a sliding movement of the housing 200. For example, the location of the dot code pattern 300 detected by the sensor module 410 may vary based on the sliding movement of the first housing (e.g., the first housing 210 in FIG. 2) with respect to the second housing 220.

According to an embodiment, the sensor module 410 may be arranged to face the dot code pattern 300. For example, the sensor module 410 may be located on the display support member 440. According to an embodiment, the display support member 440 may be disposed within a first housing (e.g., the first housing 210 in FIG. 3). According to an embodiment, the sensor module 410 may slide in the width direction (the X-axis direction) of the electronic device 200, based on the movement of the first housing 210. For example, according to the sliding of the first housing 210, the sensor module 410 may move while facing a part of the dot code pattern 300. The location of the dot code pattern 300 facing the sensor module 410 may vary according to the sliding of the first housing 210.

According to an embodiment, the dot code pattern 300 may be positioned in the second housing 220. For example, the dot code pattern 300 may be disposed on the display support member 440 (e.g., the first display support member 233 in FIG. 4) or the second support member (e.g., the second support member 225 in FIG. 4) positioned within the second housing 220. According to an embodiment, the dot code pattern 300 may have a shape extending along the direction in which the electronic device 200 slides (e.g., the width direction (the X-axis direction)). According to an embodiment, the dot code pattern 300 may be located between the second support member 225 and the display support member 440. For example, the dot code pattern 300 may be disposed on the second support member 225 by using the adhesive film 305. According to an embodiment, the distance between the second support member 225 and the display support member 440 may be about 0.3 mm, and the thickness of the dot code pattern 300 may be about 0.1 mm. According to another embodiment (not shown), the dot code pattern 300 may be disposed on the display support member 440, and the sensor module 410 may be disposed on the second support member 225.

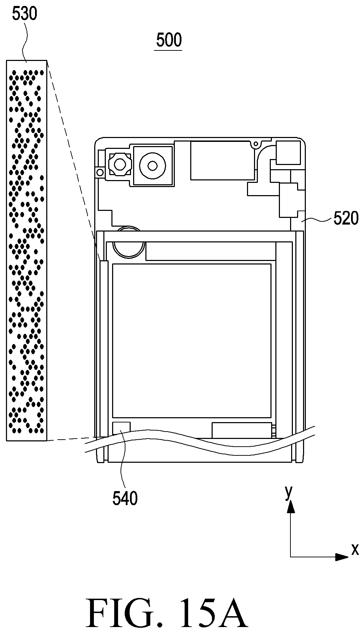

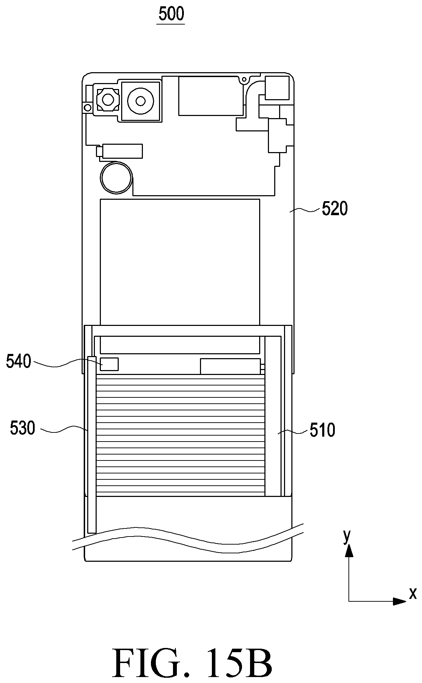

FIG. 15A is a projection of the interior of an electronic device in a closed state, according to an embodiment of the disclosure. FIG. 15B is a projection of the interior of an electronic device in an open state, according to an embodiment of the disclosure.

Referring to FIGS. 15A and 15B, the electronic device 500 may include a first housing 510, a second housing 520, a dot code pattern 530, a sensor module 540, and/or a multi-bar structure 550. The configuration of the first housing 510, the second housing 520, and/or the multi-bar structure 550 in FIGS. 15A and/or 15B may be entirely or partially the same as the configuration of the first housing 210, the second housing 220, and/or the multi-bar structure 208 in FIG. 4, and the configuration of the dot code pattern 530 and the sensor module 540 in FIGS. 15A and/or 15B may be entirely or partially the same as the configuration of the dot code pattern 300 and the sensor module 410 in FIG. 6.

According to an embodiment, an electronic device 500 may slide in the longitudinal direction (e.g., the Y-axis direction) of the electronic device 500. For example, the electronic device 500 may include the first housing 510 and the second housing 520 configured to guide the sliding movement of the first housing 510.

According to an embodiment, the sensor module 540 may be arranged to slide with respect to the dot code pattern 530. For example, the position of the dot code pattern 530 facing the sensor module 540 may vary based on the sliding movement of the first housing 510. According to an embodiment, the dot code pattern 530 may slide together with the first housing 510 while being connected to the first housing 510. The sensor module 540 may be positioned in the second housing 520. For example, the dot code pattern 530 may be disposed on the first housing 510 of the electronic device 500, and the sensor module 540 may be disposed on the second housing 520. According to an embodiment (not shown), the dot code pattern 530 may be positioned in the second housing 520, and the sensor module 540 may slide together with the first housing 510 while being connected to the first housing 510.

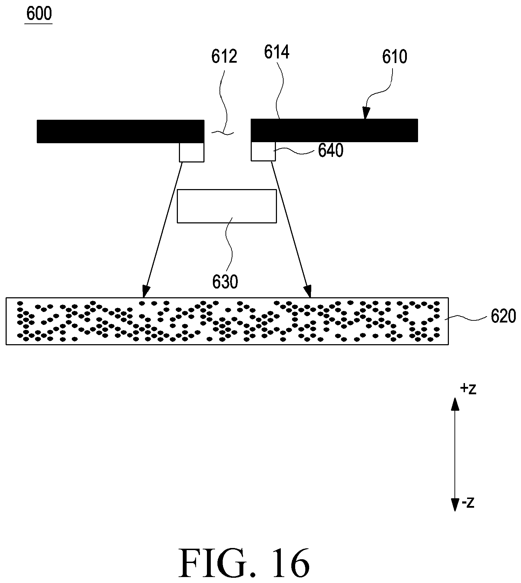

FIG. 16 is a schematic diagram of an electronic device including a light reflection member, according to an embodiment of the disclosure.

Referring to FIG. 16, an electronic device 600 may include a housing 610, a dot code pattern 620, and a sensor module 630. The configuration of the electronic device 600, housing 610, dot code pattern 620, and sensor module 630 in FIG. 16 may be entirely or partially the same as the configuration of the housing 202 in FIG. 2, and the configuration of the dot code pattern 620 and the sensor module 630 in FIG. 16 may be entirely or partially the same as the configuration of the dot code pattern 620 and the sensor module 630 in FIG. 6.

According to an embodiment, the sensor module 630 may be arranged to face the outside of the electronic device 600 to detect an external environmental condition of the electronic device 600. The sensor module 630 may be an infrared (IR) sensor of the electronic device 600. According to an embodiment, the sensor module 630 may be disposed within the housing 610 (e.g., the first housing 210 and/or the second housing 220 in FIG. 2).

According to an embodiment, the housing 610 may include at least one sensor hole 612. According to an embodiment, at least a part of the light generated by the sensor module 630 may pass through the sensor hole 612 and be transmitted to an object located outside the electronic device 600. At least a part of the light reflected from the object may be transmitted to the sensor module 630 via the sensor hole 612. According to an embodiment, the processor 120 may detect external environmental conditions by using light having passed through the sensor hole 612. According to an embodiment, the sensor hole 612 may be a through-hole. According to an embodiment, the sensor hole 612 may be substantially interpreted as a part of the transparent housing 610.

According to an embodiment, the electronic device 600 may include a light reflection member 640. According to an embodiment, the light reflection member 640 may be disposed on the housing 610. According to an embodiment, at least a part of the light reflection member 640 may be located between the housing 610 and the sensor module 630. According to an embodiment, at least a part of the light generated by the sensor module 630 may be transmitted to the light reflection member 640. According to an embodiment, the light reflection member 640 may include a material capable of reflecting at least a part of light (e.g., infrared rays). For example, the light reflection member 640 may include metal (e.g., aluminum, copper, mercury, and/or silver). According to an embodiment, the light reflection member 640 may include a prism structure.

According to an embodiment, the sensor module 630 may detect the dot code pattern 620. For example, at least a part of the light generated by the sensor module 630 may be reflected by the light reflection member 640 and transmitted to the dot code pattern 620. At least a part of the light reflected from the dot code pattern 620 may be reflected by the light reflection member 640 and transmitted to the sensor module 630.

According to an embodiment, the sensor module 630 may slide with respect to the dot code pattern 620. For example, the dot code pattern 620 may be disposed in the first housing (e.g., the first housing 210 in FIG. 2), and the sensor module 630 may be disposed in the second housing (e.g., the second housing 220 in FIG. 2). As another example, the sensor module 630 may be disposed in the first housing (e.g., the first housing 210 in FIG. 2), and the dot code pattern 620 may be disposed in the second housing (e.g., the second housing 220 in FIG. 2).

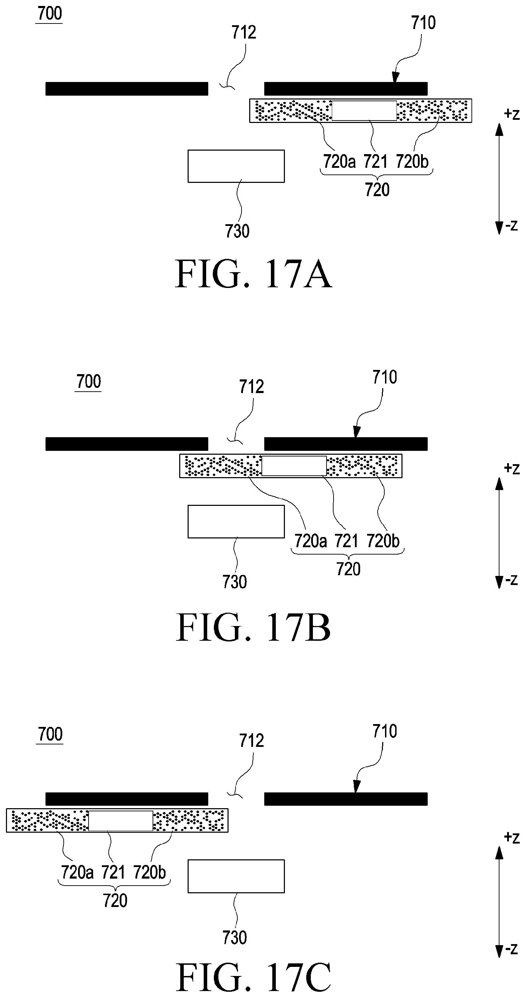

FIGS. 17A, 17B, and 17C are schematic diagrams of an electronic device including a dot code pattern moving through, or moving with respect to, a sensor hole. For example, FIG. 17A is a schematic diagram of an electronic device 700 in a fully open state (e.g., FIG. 3), FIG. 17C is a schematic diagram of the electronic device 700 in a closed state (e.g., FIG. 2), and FIG. 17B is a schematic diagram of the electronic device 700 in an intermediate state between a fully open state and a closed state.

Referring to FIGS. 17A to 17C, the electronic device 700 may include a housing 710, a sensor hole 712, a dot code pattern 720, and a sensor module 730. The configuration of the electronic device 700, the housing 710, the sensor hole 712, the dot code pattern 720, and the sensor module 730 in FIGS. 17A to 17C may be entirely or partially the same as the configuration of the electronic device 600, the housing 610, the sensor hole 612, the dot code pattern 620, and the sensor module 630 in FIG. 16.

According to an embodiment, the sensor module 730 may be arranged to face the outside of the electronic device 700 to detect the external environmental condition of the electronic device 700. According to an embodiment, the processor (e.g., the processor 120 in FIG. 1) may detect the external environmental state of the electronic device 700 by using one sensor module 730, or recognize information reflected by the dot code pattern 720.

According to an embodiment, at least a part of the dot code pattern 720 may be located between the sensor module 730 and the housing 710. For example, at least a part of the dot code pattern 720 may be disposed between the sensor hole 712 and the sensor module 730. For example, the dot code pattern 720 may face the sensor module 730, based on, or depending on, the slide operation of the electronic device 700.

According to an embodiment, the dot code pattern 720 may include a plurality of dot code patterns (e.g., a first dot code pattern 720a and a second dot code pattern 720b) spaced apart from each other. For example, the dot code pattern 720 may include the first dot code pattern 720a and the second dot code pattern 720b spaced apart from the first dot code pattern 720a. According to an embodiment, the dot code pattern 720 may include a dummy area 721 located between the first dot code pattern 720a and the second dot code pattern 720b. According to an embodiment, the dummy area 721 may be interpreted as an empty space in which no dot code pattern 720 is disposed. According to an embodiment, the dummy area 721 may be substantially transparent. According to an embodiment, the dummy area 721 may be a quiet zone in which a pixel (e.g., the dot area 301 in FIG. 5) of the dot code pattern 720 is not located.

According to an embodiment, when the electronic device 700 is in a closed state (e.g., FIG. 17C) or a fully open state (e.g., FIG. 17A), at least a part of the light generated by the sensor module 730 may pass through the sensor hole 712 and be transmitted to an object located outside the electronic device 700. At least a part of the light reflected from the object may be transmitted to the sensor module 730 via the sensor hole 712. According to an embodiment, a processor (e.g., the processor 120 in FIG. 1) may detect external environmental conditions by using the light having passed through the sensor hole 712. According to an embodiment, when the electronic device 700 is in a closed state (e.g., FIG. 17C) or a fully open state (e.g., FIG. 17A), at least one of the first dot code pattern 720a and/or the second dot code pattern 720b may not face the sensor hole 712. For example, when the electronic device 700 is in a closed state or a fully open state, the dummy area 721 of the dot code pattern 720 may face the sensor hole 712. The light emitted from the sensor module 730 may pass through the dummy area 721 and the sensor hole 712 and be transmitted to the outside of the electronic device 700, and the light reflected from an object located outside the electronic device 700 may be transmitted to the sensor module 730 via the sensor hole 712 and the dummy area 721.

According to an embodiment, when the electronic device 700 is in an intermediate state (e.g., FIG. 17B), the sensor module 730 may face at least a part of the dot code pattern 720. According to an embodiment, in the intermediate state, the processor 120 may determine information reflected by the dot code pattern 720, by using the sensor module 730.

In FIGS. 17A to 17C, the dot code pattern 720 is illustrated as including two dot code patterns 720a and 720b, but the number of dot code patterns 720 is not limited thereto. For example, the dot code pattern 720 may include three or more dot code patterns spaced apart from each other.

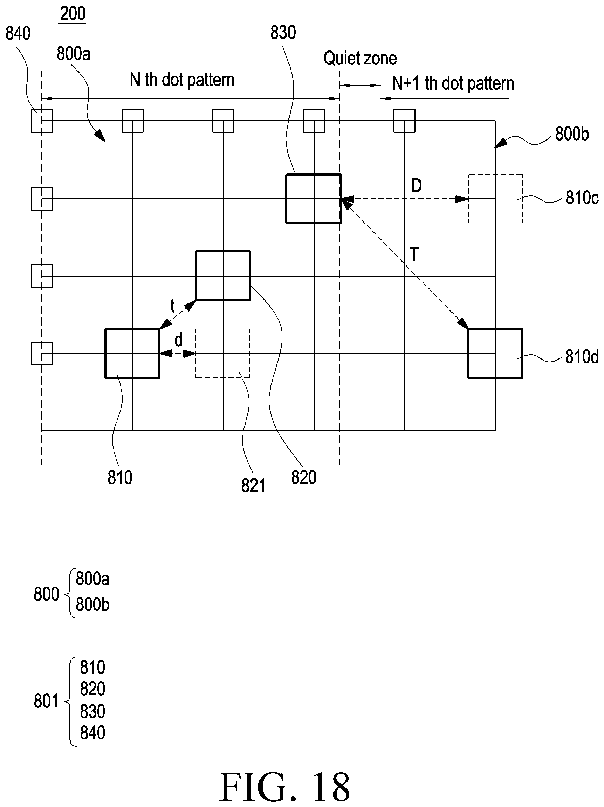

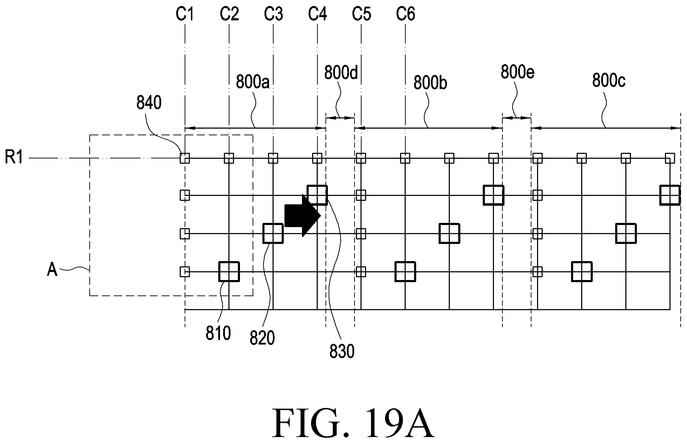

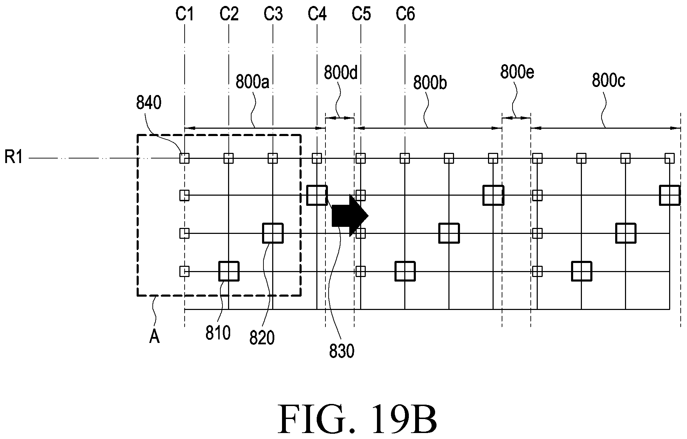

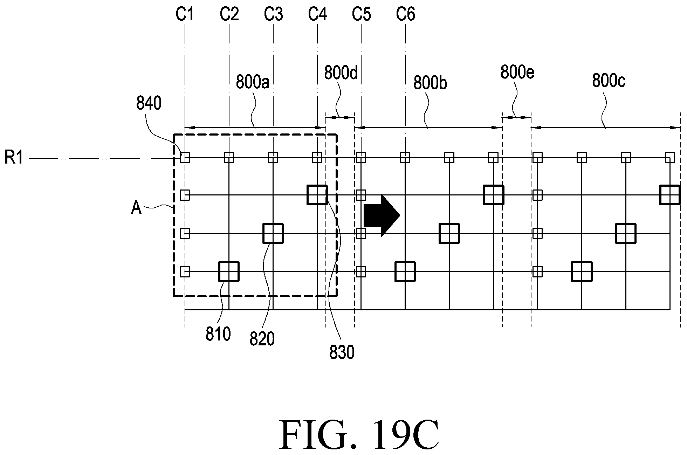

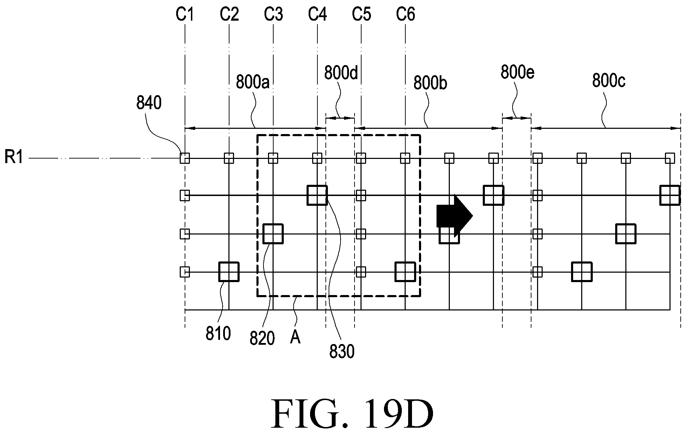

FIG. 18 is a schematic diagram of a dot code pattern, according to an embodiment of the disclosure. FIGS. 19A, 19B, 19C, and 19D are diagrams for explaining an operation of determining location information and direction information reflected by a dot code pattern, according to an embodiment of the disclosure.

Referring to FIGS. 18, 19A, 19B, 19C, and/or 19D, the electronic device 200 may include a dot code pattern 800. The configuration of the dot code pattern 800 in FIGS. 18, 19A, 19B, 19C and/or 19D may be entirely or partially the same as the configuration of the dot code pattern 300 in FIG. 5.

According to an embodiment, the dot code pattern 800 may be arranged in a matrix shape with N columns and N rows. For example, the dot code pattern 800 may be arranged in 4 rows and 4 columns. According to an embodiment, the dot code pattern 800 may include at least one dot area 801 located in at least one of 4 rows and 4 columns.

According to an embodiment, the dot code pattern 800 may include a plurality of dot code patterns (e.g., a first dot code pattern 800a, a second dot code pattern 800b, and a third dot code pattern 800c) each having N columns and N rows. According to an embodiment, the first dot code pattern 800a may be spaced apart from the second dot code pattern 800b, and the second dot code pattern 800b may be spaced apart from the third dot code pattern 800c. For example, the dot code pattern 800 may include a first dummy area 800d located between the first dot code pattern 800a and the second dot code pattern 800b, and a second dummy area 800e located between the second dot code pattern 800b and the third dot code pattern 800c. The dummy areas 800d, 800e may be interpreted as quiet zones which do not include a plurality of dots (e.g., the plurality of dots 303 in FIG. 5).

According to an embodiment, the dot area 801 may include at least one dot area (e.g., a first dot area 810, a second dot area 820, and/or a third dot area 830) for providing information (e.g., first information) reflecting the location of the dot code pattern 800. For example, the first dot area 810, the second dot area 820, and the third dot area 830 may include a plurality of dots (e.g., the plurality of dots 303 in FIG. 5) that reflect the location of the dot code pattern 300.

According to an embodiment, the dot areas 810, 820, 830 for providing information reflecting the location of the dot code pattern 800 may be arranged in a diagonal direction. For example, the rows and columns in which the first dot area 810, the second dot area 820, and the third dot area 830 are located may be different from each other. According to an embodiment, the second dot area 820 may be located between the first dot area 810 and the third dot area 830. According to an embodiment, the first dot area 810 may be located in a fourth row (R4) and a second column (C2), the second dot area 820 may be located in a third row (R3) and a third column (C3), and the third dot area 830 may be located in a second row (R2) and a fourth column (C4). According to an embodiment (not shown), the first dot area 810 may be located in the second row (R2) and the fourth column (C4), the second dot area 820 may be located in the third row (R3) and third column (C3), and the third dot area 830 may be located in the fourth row (R4) and the second column (C2).

According to an embodiment, the detection precision of the dot code pattern 800 of a sensor module (e.g., the sensor module 410 in FIG. 6) may increase when the first dot area 810, the second dot area 820, and the third dot area 830 are arranged in the diagonal direction. The accuracy of the sensor module 410 may increase when the distance between the dot areas 810 increases. For example, the distance (t) between the first dot area 810 and the second dot area 820 arranged in different rows and different columns may be longer than the distance (d1) between the first dot area 810 and the (2-1)th dot area 821 arranged in the same row and different columns. According to an embodiment, the distance (T) between the dot area (e.g., the (1-2)th dot area 810b) of the second dot code pattern 800b and the dot area (e.g., the third dot area 830) of the first dot code pattern 800a including dot areas 801 arranged in different rows and different columns may be longer than the distance (D) between the dot area (e.g., the third dot area 830) of the first dot code pattern 800a and the dot area (e.g., the (1-3)th dot area 810c) of the second dot code pattern 800b.

According to an embodiment, the dot area 801 may include at least one fourth dot area 840 located in a designated row (e.g., the first row (R1)) or a designated column (e.g., the first column (C1)). The fourth dot area 840 may provide a reference location of the dot code pattern 800 where the fourth dot area 840 is located. For example, the fourth dot area 840 may be located in the (N+1)th column (N is a natural number) or the first row (R1).

According to an embodiment, the sensor module (e.g., the sensor module 410 in FIG. 6) may detect an object (e.g., the dot area 801) located within the detection area (A). According to an embodiment, the area of the dot code pattern 800 located within the detection area (A) of the sensor module 410 may vary based on the sliding movement of the electronic device (e.g., the electronic device 200 in FIG. 2). According to an embodiment (e.g., FIG. 19A), the sensor module 410 may detect a dot area (e.g., the first dot area 810) located in the first column (C1) and the second column (C2). According to an embodiment (e.g., FIG. 19B), the sensor module 410 may detect a dot area (e.g., the first dot area 810 and the second dot area 820) located in the first column (C1) to the third column (C3). According to an embodiment (e.g., FIG. 19C), the sensor module 410 may detect a dot area (e.g., the first dot area 810, the second dot area 820, and the third dot area 830) located in the second column (C2) to the fourth column (C4). According to an embodiment (e.g., FIG. 19D), the sensor module 410 may detect a plurality of dot code patterns (e.g., the first dot code pattern 800a and the second dot code pattern 800b). For example, the sensor module 410 may detect a part of the first dot code pattern 800a (e.g., the third column (C3) and the fourth column (C4)), and a part of the second dot code pattern 800b (e.g., the fifth column (C5) and the sixth column (C6)).

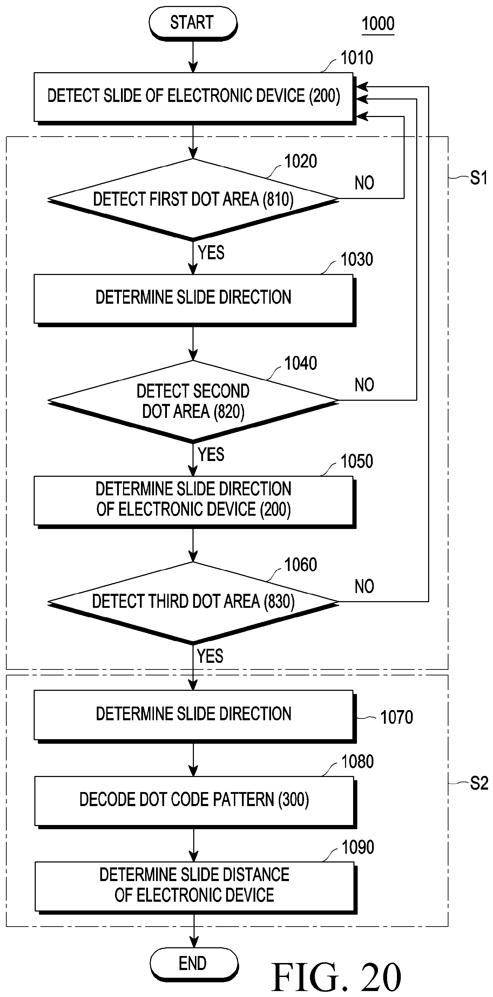

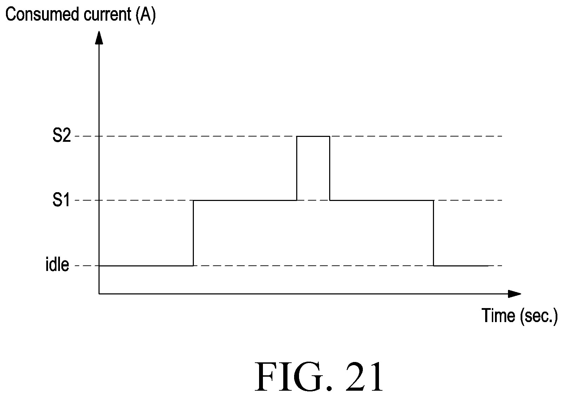

FIG. 20 is a flowchart for explaining the operation of an electronic device according to an embodiment of the disclosure. FIG. 21 is a graph illustrating current consumed to determine a dot code pattern according to an embodiment of the disclosure.

Referring to FIG. 20 and/or FIG. 21, the operation 1000 of the electronic device may include an operation 1010 of detecting the sliding of the electronic device 200, an operation 1020 of detecting the first dot area 810, an operation 1030 of determining the slide direction, an operation 1040 of detecting the second dot area 820, an operation 1050 of determining the slide direction, an operation 1060 of detecting the third dot area 830, an operation 1070 of determining the slide direction, an operation 1080 of decoding the dot code pattern 800, and/or an operation 1090 of determining the slide distance.

The configuration of the electronic device 200 in FIG. 20 may be entirely or partially the same as the configuration of the electronic device 200 in FIG. 2, and the configuration of the dot code pattern 300 in FIG. 20 may be entirely or partially the same as the configuration of the dot code pattern 300 in FIG. 5.

According to an embodiment, the electronic device 200 may perform an operation 1010 of detecting a sliding motion of the electronic device 200. According to an embodiment, the sensor module (e.g., the sensor module 410 in FIG. 6) may detect the dot code pattern 300. The processor (e.g., the processor 120 in FIG. 1) may detect whether the electronic device 200 is in a slide operation when the area of the dot code pattern 300 recognized by the sensor module 410 changes.

According to an embodiment, the electronic device 200 may perform operations 1020, 1040, 1060 of detecting a dot area (e.g., the first dot area 810, the second dot area 820, and/or the third dot area 830 in FIG. 19A) of the dot code pattern 300. For example, the sensor module (e.g., the sensor module 410 of FIG. 6) of the electronic device 200 may detect a dot area (e.g., the first dot area 810, the second dot area 820, and/or the third dot area 830 in FIG. 19A). According to an embodiment, the dot area 810, 820, 830 detected by the sensor module 410 may be different based on the sliding movement of the electronic device 200.

According to an embodiment, the electronic device 200 may perform operations 1030, 1050, 1070 of determining the slide direction of the electronic device 200. For example, the processor (e.g., the processor 120 in FIG. 1) may determine the slide direction of the electronic device 200, based on the order of the dot areas 810, 820, and 830 detected by the sensor module 410. According to an embodiment, when the sensor module 410 detects the dot areas 810, 820, 830 in the order of the first dot area 810, the second dot area 820, and the third dot area 830, the processor 120 may determine that the slide direction is the first direction in which the electronic device 200 is opened. According to an embodiment, when the sensor module 410 detects the dot areas 810, 820, and 830 in the order of the third dot area 830, the second dot area 820, and the first dot area 810, the processor 120 may determine that the slide direction is the second direction in which the electronic device 200 is closed.

According to an embodiment, the processor 120 may determine the slide direction of the electronic device 200, based on the order in which the at least two dot areas 810, 820, 830 are detected. According to an embodiment, in operation 1020 of detecting the first dot area 810, the processor 120 may determine that the slide direction of the electronic device 200 is the second direction when a dot area just before the dot area detected by the sensor module 410 of the electronic device 200 is the second dot area 820, and the processor 120 may determine that the slide direction of the electronic device 200 is the first direction when a dot area just before the dot area detected by the sensor module 410 is the third dot area 830.

According to an embodiment, the operation 1000 of the electronic device 200 may include an operation 1080 of decoding the dot code pattern 300. The operation 1080 of decoding the dot code pattern 300 may include decoding a plurality of dots (e.g., the plurality of dots 303 in FIG. 5) of the pattern area (e.g., the pattern area 301 in FIG. 5) detected by the sensor module 410, thereby determining first information reflected by the pattern areas 310, 320, 330. The first information may be interpreted as location information of the dot code pattern 300 and/or the pattern area 301 including the plurality of dots 303.

According to an embodiment, the operation 1000 of the electronic device 200 may include an operation (not shown) of determining whether the electronic device 200 is in a slide operation.

According to an embodiment, the processor (e.g., the processor 120 in FIG. 1) may determine whether the electronic device 200 is substantially in a sliding state or in a stopped state, based on the time when the pattern area 301 is detected using the sensor module 410. For example, the processor 120 may determine that the electronic device 200 is in a stopped state when a different pattern area 301 is not detected for a specified time. According to an embodiment, the processor 120 may perform the operation 1080 of decoding the dot code pattern 300 when the electronic device 200 is determined to be in a stopped state. According to an embodiment, the processor 120 may perform the operation 1080 of decoding the dot code pattern 300 when the processor 120 determines that the electronic device 200 is in a sliding state and/or the electronic device 200 is in a stopped state.

According to an embodiment, the operation 1000 of the electronic device 200 may include the operation 1090 of determining the slide distance of the electronic device 200. According to an embodiment, the processor (e.g., the processor 120 in FIG. 1) may determine the slide distance of the electronic device 200, based on information reflecting the dot code pattern 300 stored in a memory (e.g., the memory 421 in FIG. 5). For example, the processor 120 may determine the location or area of the dot code pattern 300 facing the sensor module 410, based on the information reflected by the dot code pattern 300 detected by the sensor module (e.g., the sensor module 410 in FIG. 6). According to an embodiment, the processor 120 may determine the slide distance of the electronic device 200, based on the location information of the sensor module 410 stored in the memory (e.g., the memory 421 in FIG. 6) and the location information reflected by the dot code pattern 300 detected by the sensor module 410.

According to one embodiment, the operation 1000 of the electronic device 200 may include a first step operation (S1) and a second step operation (S2).

According to an embodiment, the processor (e.g., the processor 120 in FIG. 1) may determine the slide direction of the electronic device 200, based on the location information (first information) reflected by the dot code pattern 300. For example, the first step operation (S1) may include the operation 1010 of detecting the slide of the electronic device 200, the operation 1020 of detecting the first dot area 810, the operation 1030 of determining the slide direction, the operation 1040 of detecting the second dot area 820, the operation 1050 of determining the slide direction, and/or the operation 1060 of detecting the third dot area 830. According to another embodiment (not shown), the first step operation (S1) may further include the operation 1070 of determining the slide direction.

According to an embodiment, the processor 120 may perform a second step operation (S2) after the sensor module 410 detects at least three dot areas 810, 820, 830. The second step operation (S2) may include the operation 1070 of determining the slide direction, the operation 1080 of decoding the dot code pattern 300, and/or the operation 1090 of determining the slide distance of the electronic device 200.

According to an embodiment, the power consumed by the electronic device 200 in the first step operation (S1) may be less than the current and/or power consumed by the electronic device 200 in the second step operation (S2). For example, the processor 120 may detect one dot code pattern 300 and then decode the dot code pattern 300, thereby reducing current and/or power required to decode the dot code pattern 300. According to an embodiment, the power consumed by the electronic device 200 in the first step operation (S1) may be greater than the power consumed by the electronic device 200 in an idle state.

Electronic devices (e.g., portable terminals) include displays having a flat surface or having a flat surface and a curved surface. The electronic devices including displays may have limitations in implementing a screen larger than the size of the electronic device due to the fixed display structure. Accordingly, electronic devices including rollable displays are being studied.

In an electronic device including a rollable display, the size of the graphic display area displayed on the display may vary based on the slide distance of the electronic device. Therefore, to adjust graphics displayed on electronic devices, structures for detecting the slide distance of the electronic devices are being studied.

The slide distance of the electronic device may be sensed using a magnetic field sensor (e.g., a Hall sensor) or a capacitive sensor disposed within the electronic device. However, when measuring the slide distance value using a magnetic field sensor or an inductive sensor, the accuracy of the measured slide distance may be reduced due to the magnet inside the electronic device and/or the magnetic field transmitted from the outside the electronic device.

The slide distance of the electronic device may be sensed using a touch screen panel and a conductive member for providing a signal to an integrated circuit of the touch screen panel. However, when a conductive member is used, stress may be accumulated in the display and the durability of the electronic device may be reduced.

An embodiment of the disclosure may provide an electronic device capable of determining a slide distance of the electronic device independently of external factors (e.g., an external magnetic field).

However, the subject pursued in the disclosure is not limited to the above-mentioned subjects, and may be expanded in various ways without departing from the scope of the disclosure.

An electronic device according to an embodiment of the disclosure may determine the slide distance and/or slide direction of the electronic device by using a dot code pattern and a sensor module. The movement of the electronic device may be determined using the dot code pattern, thereby increasing the accuracy of determining the slide distance.

A dot code pattern according to an embodiment of the disclosure may include a plurality of dot areas located in different rows and different columns. When the distance between the plurality of dot areas increases, the detection accuracy of the dot code pattern of the sensor module may increase.

## Claims

1. An electronic device (200) comprising:
a housing (202) comprising a first housing (210) and a second housing (220) configured to accommodate at least a portion of the first housing (210) and for guiding a sliding movement of the first housing (210);
a flexible display (230), a portion of which is connected to the second housing (220), and configured to be unfolded and folded based on the sliding movement of the first housing (210);
a sensor module (410) disposed in the first housing (210);
a multi-bar structure (208) received in a guide rail of the first housing (210) and configured to support at least a portion of the flexible display (230);
dot code patterns (300) disposed on bars (432) of the multi-bar structure (208) and configured to slide with respect to the sensor module (410), the dot code patterns (300) comprising a dot area (310) with a plurality of dots (303), wherein the sensor module (410) is adapted to detect the plurality of dots (303) and arranged to face the dot code patterns (300); and
a processor (120) configured to recognize the plurality of dots (303) located in the dot area (301) and to determine a slide distance of the first housing (210) with respect to the second housing (220) by using the sensor module (410).

2. The electronic device (200) of claim 1, wherein the dot code pattern (300) includes a plurality of dot areas (301) arranged in a plurality of rows and a plurality of columns, and
wherein at least one of the plurality of dot areas (301) includes the plurality of dots (303) located in at least one among a first quadrant, a second quadrant, a third quadrant, or a fourth quadrant divided by a first reference line and a second reference line perpendicular to the first reference line.

3. The electronic device (200) of claim 1, wherein the multi-bar structure (208) includes a first surface (430a) facing the display (230), and a second surface (430b) opposite to the first surface (430a) and having an at least partially curved surface, and
wherein the dot code pattern (300) is disposed on the second surface (430b).

4. The electronic device (200) of one of the preceding claims, wherein the display (230) includes a first display area (231) disposed on the second housing (220), and a second display area (232) extending from the first display area (231) and configured to be visually exposed to an outside of the electronic device (200), based on movement of the first housing (210).

5. The electronic device (200) of one of the preceding claims, wherein the dot code pattern (300) comprises an adhesive film (305) and a plurality of dots (303) printed on the adhesive film (305).

6. The electronic device (200) of one of the preceding claims, wherein the dot code pattern (300) includes a plurality of dot areas (301) arranged in N rows and N columns.

7. The electronic device (200) of claim 6, wherein at least one dot area (340) located in a first row or a first column of the dot code pattern (300) includes second information configured to provide a reference location of the dot code pattern (300).

8. The electronic device (200) of one of claims 6 or 7, wherein the plurality of dot areas include a first dot area (310), a second dot area (320), and a third dot area (330), which are located in different rows and columns respectively, and
wherein the second dot area (320) is located between the first dot area (310) and the third dot area (330).

9. The electronic device (200) of one of the preceding claims, wherein the processor (120) is configured to determine a slide direction of the first housing (210), based on an order in which at least two dot areas of the dot code pattern (300) are detected.

10. The electronic device (200) of one of the preceding claims, wherein the processor (120) is configured to determine a slide distance of the first housing (210) by decoding the dot code pattern (300) after at least three dot areas of the dot code pattern (300) are detected using the sensor module (410).

11. The electronic device (600) of one of the preceding claims, wherein the housing (202) includes a first housing area (614) surrounding at least a portion of a sensor hole (612), and
wherein the electronic device (600) further comprises a light reflection member (640) disposed between the first housing area (614) and the sensor module (630).

12. The electronic device (700) of one of the preceding claims, wherein at least a portion of the dot code pattern (720) is configured to slide between the sensor hole (712) and the sensor module (730).

## Patentansprüche

1. Elektronische Vorrichtung (200), umfassend:
ein Gehäuse (202), das ein erstes Gehäuse (210) und ein zweites Gehäuse (220), das so konfiguriert ist, dass es zumindest einen Abschnitt des ersten Gehäuses (210) aufnimmt und eine Gleitbewegung des ersten Gehäuses (210) führt, umfasst;
eine flexible Anzeige (230), von der ein Abschnitt mit dem zweiten Gehäuse (220) verbunden ist und die so konfiguriert ist, dass sie basierend auf der Gleitbewegung des ersten Gehäuses (210) entfaltet und faltet wird;
ein Sensormodul (410), das im ersten Gehäuse (210) angeordnet ist;
eine Mehrstangenstruktur (208), die in einer Führungsschiene des ersten Gehäuses (210) aufgenommen und dazu konfiguriert ist, zumindest einen Abschnitt der flexiblen Anzeige (230) abzustützen;
Punktcodemuster (300), die auf Stangen (432) der Mehrstangenstruktur (208) angeordnet und dazu konfiguriert sind, in Bezug auf das Sensormodul (410) zu gleiten, wobei die Punktcodemuster (300) einen Punktbereich (310) mit einer Vielzahl von Punkten (303) umfassen, wobei das Sensormodul (410) zum Erfassen der Vielzahl von Punkten (303) ausgelegt und so angeordnet ist, dass es den Punktcodemustern (300) zugewandt ist; und
einen Prozessor (120), der dazu konfiguriert ist, die Vielzahl von Punkten (303), die sich im Punktbereich (301) befinden, zu erkennen und unter Verwendung des Sensormoduls (410) einen Gleitabstand des ersten Gehäuses (210) in Bezug auf das zweite Gehäuse (220) zu bestimmen.

2. Elektronische Vorrichtung (200) nach Anspruch 1, wobei das Punktcodemuster (300) eine Vielzahl von Punktbereichen (301) umfasst, die in einer Vielzahl von Zeilen und einer Vielzahl von Spalten angeordnet sind, und
wobei mindestens einer der Vielzahl von Punktbereichen (301) die Vielzahl von Punkten (303) umfasst, die sich in mindestens einem von einem ersten Quadranten, einem zweiten Quadranten, einem dritten Quadranten und einem vierten Quadranten befinden, die durch eine erste Referenzlinie und eine zweite, senkrecht zur ersten Referenzlinie verlaufende Referenzlinie geteilt sind.

3. Elektronische Vorrichtung (200) nach Anspruch 1, wobei die Mehrstangenstruktur (208) eine der Anzeige (230) zugewandte erste Oberfläche (430a) und eine der ersten Oberfläche (430a) gegenüberliegende zweite Oberfläche (430b) mit einer zumindest teilweise gekrümmten Oberfläche umfasst, und
wobei das Punktcodemuster (300) auf der zweiten Oberfläche (430b) angeordnet ist.

4. Elektronische Vorrichtung (200) nach einem der vorstehenden Ansprüche, wobei die Anzeige (230) einen ersten Anzeigebereich (231), der auf dem zweiten Gehäuse (220) angeordnet ist, und einen zweiten Anzeigebereich (232) umfasst, der sich vom ersten Anzeigebereich (231) erstreckt und so konfiguriert ist, dass er basierend auf der Bewegung des ersten Gehäuses (210) visuell zu einer Außenseite der elektronischen Vorrichtung (200) freigelegt ist.

5. Elektronische Vorrichtung (200) nach einem der vorstehenden Ansprüche, wobei das Punktcodemuster (300) einen Klebefilm (305) und eine Vielzahl von auf den Klebefilm (305) aufgedruckten Punkten (303) umfasst.

6. Elektronische Vorrichtung (200) nach einem der vorstehenden Ansprüche, wobei das Punktcodemuster (300) eine Vielzahl von Punktbereichen (301) umfasst, die in N Zeilen und N Spalten angeordnet sind.

7. Elektronische Vorrichtung (200) nach Anspruch 6, wobei mindestens ein Punktbereich (340), der sich in einer ersten Zeile oder einer ersten Spalte des Punktcodemusters (300) befindet, zweite Informationen enthält, die dazu konfiguriert sind, eine Referenzposition des Punktcodemusters (300) bereitzustellen.

8. Elektronische Vorrichtung (200) nach einem der Ansprüche 6 oder 7, wobei die Vielzahl von Punktbereichen einen ersten Punktbereich (310), einen zweiten Punktbereich (320) und einen dritten Punktbereich (330) umfassen, die sich jeweils in unterschiedlichen Zeilen und Spalten befinden, und
wobei sich der zweite Punktbereich (320) zwischen dem ersten Punktbereich (310) und dem dritten Punktbereich (330) befindet.

9. Elektronische Vorrichtung (200) nach einem der vorstehenden Ansprüche, wobei der Prozessor (120) dazu konfiguriert ist, eine Gleitrichtung des ersten Gehäuses (210) auf der Grundlage einer Reihenfolge zu bestimmen, in der mindestens zwei Punktbereiche des Punktcodemusters (300) erfasst werden.

10. Elektronische Vorrichtung (200) nach einem der vorstehenden Ansprüche, wobei der Prozessor (120) dazu konfiguriert ist, einen Gleitabstand des ersten Gehäuses (210) zu bestimmen, indem er das Punktcodemuster (300) decodiert, nachdem mindestens drei Punktbereiche des Punktcodemusters (300) unter Verwendung des Sensormoduls (410) erfasst wurden.

11. Elektronische Vorrichtung (600) nach einem der vorstehenden Ansprüche, wobei das Gehäuse (202) einen ersten Gehäusebereich (614) umfasst, der zumindest einen Abschnitt eines Sensorlochs (612) umgibt, und
wobei die elektronische Vorrichtung (600) ferner ein Lichtreflexionselement (640) umfasst, das zwischen dem ersten Gehäusebereich (614) und dem Sensormodul (630) angeordnet ist.

12. Elektronische Vorrichtung (700) nach einem der vorstehenden Ansprüche, wobei zumindest ein Abschnitt des Punktcodemusters (720) so konfiguriert ist, dass er zwischen dem Sensorloch (712) und dem Sensormodul (730) gleitet.

## Revendications

1. Dispositif électronique (200) comprenant :
un boîtier (202) comprenant un premier boîtier (210) et un second boîtier (220) configuré pour accueillir au moins une partie du premier boîtier (210) et pour guider un mouvement de coulissement du premier boîtier (210) ;
un écran souple (230), dont une partie est reliée au second boîtier (220), et configuré pour être déplié et plié sur la base du mouvement de coulissement du premier boîtier (210) ;
un module de capteur (410) disposé dans le premier boîtier (210) ;
une structure à multi-barre (208) logée dans un rail de guidage du premier boîtier (210) et configurée pour supporter au moins une partie de l'écran souple (230) ;
des motifs à code à points (300) disposés sur des barres (432) de la structure à multi-barre (208) et configurés pour coulisser par rapport au module de capteur (410), les motifs à code à points (300) comprenant une zone de points (310) avec une pluralité de points (303), le module de capteur (410) s'adaptant à détecter la pluralité de points (303) et étant agencé pour faire face aux motifs à code à points (300) ; et
un processeur (120) configuré pour reconnaître la pluralité de points (303) situés dans la zone de points (301) et pour déterminer une distance de coulissement du premier boîtier (210) par rapport au second boîtier (220) en utilisant le module de capteur (410).

2. Dispositif électronique (200) selon la revendication 1, dans lequel le motif à code à points (300) inclut une pluralité de zones de points (301) agencées en une pluralité de lignes et une pluralité de colonnes, et
dans lequel au moins l'une de la pluralité de zones de points (301) inclut une pluralité de points (303) situés dans au moins l'un parmi un premier quadrant, un deuxième quadrant, un troisième quadrant ou un quatrième quadrant, qui sont divisés par une première ligne de référence et une seconde ligne de référence perpendiculaire à la première ligne de référence.

3. Dispositif électronique (200) selon la revendication 1, dans lequel la structure à multi-barre (208) comprend une première surface (430a) faisant face à l'écran (230), et une seconde surface (430b) à l'opposé de la première surface (430a) et ayant une surface au moins partiellement courbée, et
dans lequel le motif à code à points (300) est disposé sur la seconde surface (430b).

4. Dispositif électronique (200) selon l'une quelconque des revendications précédentes, dans lequel l'écran (230) inclut une première zone d'affichage (231) disposée sur le second boîtier (220), et une seconde zone d'affichage (232) s'étendant à partir de la première zone d'affichage (231) et configurée pour être visuellement exposée à un extérieur du dispositif électronique (200), sur la base d'un mouvement du premier boîtier (210).

5. Dispositif électronique (200) selon l'une quelconque des revendications précédentes, dans lequel le motif à code à points (300) comprend un film adhésif (305) et une pluralité de points (303) imprimés sur le film adhésif (305).

6. Dispositif électronique (200) selon l'une quelconque des revendications précédentes, dans lequel le motif à code à points (300) inclut une pluralité de zones de points (301) agencées en N lignes et N colonnes.

7. Dispositif électronique (200) selon la revendication 6, dans lequel au moins une zone de points (340) située dans une première ligne ou une première colonne du motif à code à points (300) inclut des secondes informations configurées pour fournir un emplacement de référence du motif à code à points (300).

8. Dispositif électronique (200) selon l'une quelconque des revendications 6 ou 7, dans lequel la pluralité de zones de points incluent une première zone de points (310), une deuxième zone de points (320) et une troisième zone de points (330), qui sont situées dans différentes lignes et colonnes respectivement, et
dans lequel la deuxième zone de points (320) est située entre la première zone de points (310) et la troisième zone de points (330).

9. Dispositif électronique (200) selon l'une quelconque des revendications précédentes, dans lequel le processeur (120) est configuré pour déterminer une direction de coulissement du premier boîtier (210), sur la base d'un ordre dans lequel au moins deux zones de points du motif à code à points (300) sont détectées.

10. Dispositif électronique (200) selon l'une quelconque des revendications précédentes, dans lequel le processeur (120) est configuré pour déterminer une distance de coulissement du premier boîtier (210) en décodant le motif à code à points (300) après qu'au moins trois zones de points du motif à code à points (300) ont été détectées en utilisant le module de capteur (410).

11. Dispositif électronique (600) selon l'une quelconque des revendications précédentes, dans lequel le boîtier (202) inclut une première zone de boîtier (614) entourant au moins une partie d'un trou de capteur (612), et
dans lequel le dispositif électronique (600) comprend en outre un élément de réflexion de lumière (640) disposé entre la première zone de boîtier (614) et le module de capteur (630).

12. Dispositif électronique (700) selon l'une quelconque des revendications précédentes, dans lequel au moins une partie du motif à code à points (720) est configurée pour coulisser entre le trou de capteur (712) et le module de capteur (730).
